(19) Europäisches Patentamt European Patent Office Office européen des brevets

(11) **EP 2 897 898 B1**

(12) **EUROPEAN PATENT SPECIFICATION**

(45) Date of publication and mention of the grant of the patent:
**19.10.2022 Bulletin 2022/42**

(21) Application number: **12885015.3**

(22) Date of filing: **18.09.2012**

(51) International Patent Classification (IPC):
**C01B 3/24** *(2006.01)*    **C10J 3/02** *(2006.01)*

(52) Cooperative Patent Classification (CPC):
**C01B 3/24; C10B 53/02; C10J 3/02; C10L 9/086;**
C01B 2203/0272; C01B 2203/066;
C01B 2203/1217; C10J 2300/0916;
C10J 2300/0973; Y02E 50/10; Y02P 20/145;
Y02P 30/20

(86) International application number:
**PCT/US2012/055922**

(87) International publication number:
**WO 2014/046644 (27.03.2014 Gazette 2014/13)**

(54) **C-O-H COMPOUND PROCESSING FOR HYDROGEN OR LIQUID FUEL PRODUCTION**

VERARBEITUNG EINER C-O-H-VERBINDUNG ZUR WASSERSTOFF- ODER FLÜSSIGBRENNSTOFFHERSTELLUNG

TRAITEMENT DE COMPOSÉS C-O-H POUR PRODUIRE DE L'HYDROGÈNE OU UN COMBUSTIBLE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.07.2015 Bulletin 2015/31**

(73) Proprietor: **Proton Power, Inc.**
**Lenoir City, TN 37771 (US)**

(72) Inventors:
• **WEAVER, Samuel C.**
  **Knoxville, Tennessee 37922 (US)**
• **WEAVER, Samuel P.**
  **Boulder, Colorado 80304 (US)**
• **WEAVER, Daniel C.**
  **Boulder, Colorado 80303 (US)**
• **HENSLEY, Daniel L.**
  **Knoxville, Tennessee 37934 (US)**

(74) Representative: **Gill, David Alan**
**WP Thompson**
**138 Fetter Lane**
**London EC4A 1BT (GB)**

(56) References cited:
| | |
|---|---|
| **WO-A1-2009/151368** | **WO-A2-01/66496** |
| **US-A- 5 019 135** | **US-A- 5 417 817** |
| **US-A- 5 651 953** | **US-A1- 2006 112 638** |
| **US-A1- 2009 318 572** | **US-A1- 2010 129 691** |
| **US-A1- 2010 186 291** | **US-B1- 6 455 011** |

EP 2 897 898 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

There have been several methods of hydrogen extraction from cellulose ($C_6H_{10}O_5$). One of the methods is focused on using microbial bugs along with sodium hydroxide (NaOH) and a catalyst to cause a reaction that releases the hydrogen in cellulose and captures the carbon in cellulose as sodium carbonate ($Na_2CO_3$). There is still a remaining need for developing a simpler and cost effective way of generating hydrogen gas from all C-O-H compounds found in cellulosic biomass more generally, and in a fashion that allows efficient use of the resulting hydrogen for use on-site, for purification, packaging, and distribution or for power generation from the reaction-product hydrogen gas using a reciprocating engine, turbine, or fuel cell.

While various cellulosic biomass hydrogen extraction techniques exist in the art, there is still a general need for the development of alternative techniques that may be cost effective, energy efficient and useful for applications using hydrogen, including hydrogen on demand, and conversion to a hydrogen-rich gas stream that can be directly combusted to produce power and heat. Heat and power applications from efficiently generated hydrogen rather than fossil fuels are useful for reducing the greenhouse gas emissions of other applications that require heat or power, including the production of liquid biofuels. This need may be driven at least in part by the wide variety of applications that make use of hydrogen, some of which have significantly different operation considerations than others. Hydrogen, produced on demand, available for use on the site at which it is generated and therefore that does not require extensive infrastructure for its transportation, and produced at atmospheric pressure and lower temperatures than exist in the prior art, would satisfy that need.

Furthermore, extensive work has been done on conversion of cellulose, which is one example of a C-O-H compound, into ethanol (molecular formula: $C_2H_5OH$). Ethanol is known as drinking alcohol found in beverages. Ethanol is a flammable solvent and miscible with water and many organic solvents. The largest use of ethanol is as a motor fuel and fuel additive. In the United States, ethanol is most commonly blended with gasoline as a 10% ethanol blend. This blend is widely sold throughout the U.S. Midwest, and in cities required by the 1990 Clean Air Act to oxygenate their gasoline during wintertime. The energy returned on energy invested for ethanol made from corn in the U.S. is 1.34. This means that it yields 34% more energy than it takes to produce it.

While various techniques thus exist in the art for making liquid fuel from C-O-H compounds, there is still a general need for the development of alternative techniques. This need is driven at least in part by the wide variety of applications that make use of liquid fuels, some of which have significantly different operation considerations than others.

US 2006/0112638 describes a method of upgrading a biomass comprising: an upgrading step for performing upgrading treatment of a cellulose based biomass with an oxygen/carbon atomic ratio of at least 0.5, in presence of water and under a pressure of at least saturated water vapour pressure, and reducing said oxygen/carbon atomic ratio of said biomass to no more than 0.38, and a separation step for separating an upgraded reactant obtained from said upgrading step into a solid component and a liquid component.

WO01/066496 describes a process for the production of oxygenated $C_2$ hydrocarbons from cellulose. The input cellulose waste is gasified using steam in the absence of air and the primary gaseous products of carbon monoxide and hydrogen are subjected to heat, pressure, and catalysts to form methyl alcohol. Carbon monoxide is added to the methyl alcohol and further subjected to heat, pressure and catalysts to form acetic acid. The acetic acid is purified using a distillation tower, and removed for sale. Output production is increased by adding further carbon monoxide and hydrogen from burners used to heat the gasifiers. Further carbon monoxide and hydrogen are also produced by steam gasification of the carbon residue to promote a water/gas shift. These gases are fed into the gas stream produced by the gasification of cellulose, and provide more feedstock for the reactions. The three input gas streams arising from: 1) the steam gasification of cellulose; 2) the water/gas shift in the carbon reactor; and 3) the sub-stoichiometic oxygen burning of input burner gas to heat both retorts, maximize the output chemical production while reducing the consumption of energy needed for processing the cellulose and the carbon.

US 5,019,135 describes a method for converting lignocellulosic materials contained in biomass and other feedstocks into a fuel gas. The method comprises maintaining, in a pressure vessel, at a temperature of 300°C to 450°C, and a pressure of at least 100 atmospheres, lignocellulosic material and water, and amounts of alkali and reduced nickel catalysts sufficient to catalyse a reaction of the lignocellulosic material to produce a product gas composed primarily of methane, hydrogen and carbon dioxide.

US 5,651,953 describes production of hydrogen from a cellulose-containing biomass by heating the biomass in the presence of water and a catalyst at a temperature of 250°-374°C and at a pressure higher than the saturated vapour pressure of water. The catalyst includes a catalytic metal selected from the group consisting of nickel, iron, cobalt, molybdenum, tungsten, platinum and mixtures thereof.

US 2010/0186291 describes a liquid fuel production process from Cellulosic biomass and coal comprises providing a mixture of Cellulosic biomass and coal, subjecting the mixture to gasification to obtain synthesis gas and converting the synthesis gas to a liquid fuel under the presence of catalyst. The catalyst includes molybdenum sulphide, alkali metal compound and a component activating the C-H bond in alkanes product, wherein the alkali metal compound is selected from the group of salts of Li, Na, K, Rb and Cs, the component activating the C-H bond in alkanes product is selected from Mo, V, Os, Re, Ir, Pt, Pd, Co, Rh, Ni and their mixture. Additionally, co-gasification of Cellulosic biomass and coal can reduce the ash fusion temperature of coal.

US 2010/0129691 describes devices and related methods for enhanced gasification of carbonaceous material in which supplemental carbon dioxide is introduced to the gasifier. The gasified carbonaceous material can then be used as a syngas or further processed into hydrocarbon form. The hydrocarbon can then be used in a fuel cell to produce electrical power or used in a traditional combustion process.

BRIEF SUMMARY

Methods and systems are disclosed for extracting hydrogen and/or liquid fuel from a compound comprising carbon, oxygen, and hydrogen ("C-O-H"). The compound may include cellulose, lignin, and/or hemicellulose, for example. The compound may include waste streams that include at least one C-O-H compound. Water may be combined with the C-O-H compound to produce a wet form of the C-O-H compound. The wet form of the C-O-H compound may be transferred into a reaction processing chamber. The wet form of the C-O-H compound may be heated within the reaction chamber such that elements of the C-O-H compound dissociate and react, with one reaction product comprising at least hydrogen gas and/or liquid fuel. Embodiments utilize hydrous pyrolysis reactions to produce hydrogen. The hydrogen gas may be utilized to generate electrical power, heat, or power different types of engines.

It is noted that only methods for extracting hydrogen fall within the scope of the invention which is defined by the appended claims. Any teaching falling outside of the scope of the claims is provided for reference only.

Thus, according to a first aspect of the present invention there is provided a method for extracting at least hydrogen gas from a compound comprising carbon, oxygen, and hydrogen, the method comprising: determining an amount of water to combine with the compound to produce a wet form of the compound and to react through a hydrous pyrolysis reaction with the compound, wherein the determined amount of water equals at least:

$M_T$ {(1-W)( 0.7778C + [18(16+n)/(150+31n)]L + 0.79G + 1.37X]) - W}, wherein: $M_T$ equals a mass of the compound; W equals a weight percent water of the compound; C equals a cellulose ($C_6H_{10}O_5$) percentage of the compound; L equals a lignin ($C_{9+n}H_{10+3n}O_{2+n}$) percentage of the compound and 0.9 < n < 1.4; X equals a xylan ($C_{17}H_{36}O_8$) percentage of the compound; and G equals a glucomannan ($C_{35}H_{49}O_{35}$) percentage of the compound; or $M_T$ {(1-W)[mass($H_2O$) × (2%C/mass(C) - %O/mass(O))] - W}, wherein: $M_T$ equals a mass of the compound; W equals a weight percent water of the compound; %C equals a carbon weight percentage of the compound; and %O equals an oxygen weight percentage of the compound; combining the determined amount of water with the compound to produce the wet form of the compound, wherein the compound comprises at least cellulose, lignin, hemicellulose, or a waste stream, wherein the waste stream includes at least one C-O-H compound selected from paper waste, sawdust of wood, cardboard, hay, straw, switchgrass, municipal solid waste, sanitized waste, simulated nuclear waste and/or demolition and construction wood waste; transferring the wet form of the compound into a reaction processing chamber; heating the wet form of the compound within the reaction processing chamber to a temperature between 700 °C and 1100 °C such that elements comprised by the wet form of the compound dissociate and react through the hydrous pyrolysis reaction, wherein one reaction product comprises at least the hydrogen gas; and extracting at least the hydrogen gas.

Some embodiments may provide several advantages. Hydrogen generated from C-O-H compounds in accordance with various embodiments may involve reactions that may occur under conditions involving atmospheric pressure. Reaction temperatures may also involve temperatures ranging from 700°C to 1100°C depending on the requirements for the form of the product hydrogen. Embodiments also include mixing water in with the biomass in a wet form, rather than reacted in the form of water vapor; embodiments may thus not involve a water shift reaction. Embodiments may also use a variety of different materials including, but not limited to, cellulose, lignin, hemicellulose, or combinations of any of the three. Some embodiments may utilize other feedstocks and/or waste streams that include C-O-H, such as paper waste, sawdust of a wide variety of wood types, cardboard, hay, straw, switchgrass, municipal solid waste, sanitized waste, simulated nuclear waste, demolition and construction wood waste; these various feedstocks may generally be referred to waste products. Embodiments may be used to produce hydrogen by separating the $H_2$ from the $CO_2$ and other byproducts, or keeping the $H_2$ and $CO_2$ together to burn for heat, power, CHP, and/or liquid fuels production, merely by way of example.

Claimed embodiments include a method for extracting hydrogen from a compound comprising carbon, oxygen, and hydrogen. The method includes: combining water with the compound to produce a wet form of the compound; transferring the wet form of the compound into a reaction processing chamber; heating the wet form of the compound within the reaction chamber such that elements comprised by the wet form of the compound dissociate and react, wherein one reaction product comprises hydrogen gas; and/or extracting the hydrogen gas.

The wet form of the compound within the reaction chamber is heated such that elements comprised by the wet form of the compound may dissociate and react through a non-oxidation reaction. The non-oxidation reaction includes a hydrous pyrolysis reaction. Heating the wet form of the compound within the reaction chamber may occur under atmospheric pressure conditions.

The compound may consist of carbon, oxygen, and hydrogen. The compound may include cellulose. The compound may include lignin. The compound may include hemicellulose. The compound may include a waste stream that includes C-O-H compounds. In some embodiments, the water includes liquid water.

Some embodiments provide a flow of an inert gas to the reaction chamber. The inert gas may include at least argon or nitrogen. The extracted hydrogen gas may be processed to generate at least electrical power or heat. The extracted hydrogen gas may be processed to produce liquid fuels. The extracted hydrogen gas may be processed by burning the hydrogen gas. The extracted hydrogen gas may be processed by feeding the hydrogen gas into a fuel cell.

Processing the hydrogen gas may include passing reaction-product gases through a reduced pressure chamber to remove traces of unreacted carbon. Processing the hydrogen gas may include passing reaction-product gases through a water-cooled chamber to remove unreacted water. Heating the wet form of the compound includes heating the wet form of the compound to a temperature between 700 °C and 1100 °C.

Transferring the wet form of the compound into a reaction processing chamber may occur continuously. The continuous transfer of the wet form of the compound into the reactor may utilize a geometry that reduces the presence of air.

Also disclosed but not claimed, is a system for extracting hydrogen from a compound comprising carbon, oxygen, and hydrogen. The system may include: a processing chamber; a heating source in thermal communication with an interior of the processing chamber; a source of the compound disposed within the processing chamber; a source of water for reacting with the compound; and/or an exhaust system for extracting resultant hydrogen gas from the processing chamber.

The processing chamber and/or the heating source may be configured to heat a wet form of the compound within the processing chamber such that elements comprised by the wet form of the compound dissociate and react through a non-oxidation reaction. The non-oxidation reaction may include a hydrous pyrolysis reaction. The source of water may be configured to combine water with the compound to produce a wet form of the compound outside the processing chamber.

The system may include a conveyor for conveying the wet form of the compound into the processing chamber. The processing chamber may be configured to operate under atmospheric pressure conditions.

For the system, the compound may consist of carbon, oxygen, and hydrogen. The compound may include cellulose. The compound may include lignin. The compound may include hemicellulose. The compound may include a waste stream that includes C-O-H compounds. The water may include liquid water.

The system may include a gas delivery system configured to provide a flow of inert gas to the processing chamber. The inert gas may include at least argon or nitrogen. The extracted hydrogen gas may be processed to generate at least electrical power or heat. The extracted hydrogen gas may be processed to produce liquid fuels. The extracted hydrogen gas may be processed by burning the hydrogen gas. The extracted hydrogen gas may be processed by feeding the hydrogen gas into a fuel cell.

The exhaust system for extracting resultant hydrogen gas from the processing chamber may be configured to pass reaction-product gases through a reduced pressure chamber to remove traces of unreacted carbon. Optionally, the exhaust system for extracting resultant hydrogen gas from the processing chamber is configured to pass reaction-product gases through a water-cooled chamber to remove unreacted water.

At least the processing chamber or the heating source may be configured to heat a wet form of the compound a temperature between 700 °C and 1100 °C. Some systems may include a conveyor configured for transferring a wet form of the compound into the processing chamber. The conveyor may be configured to continuously transfer of the wet form of the compound into the processing chamber. This may utilize a geometry that reduces the presence of air.

Some embodiments include a method for extracting hydrogen. This may be further processed. The method includes: heating a wet compound, the compound comprising carbon, oxygen, and hydrogen, such that elements comprised from the wet compound dissociate and react to form at least hydrogen gas.

Heating the wet compound such that elements comprised from the wet compound dissociate and react to form at least hydrogen gas through a hydrous pyrolysis reaction. The hydrogen gas may be processed to generate at least electrical power or heat. The hydrogen gas may be processed to produce liquid fuels.

Optionally, the compound consists of carbon, oxygen, and hydrogen. The compound may include cellulose. The compound may include lignin. The compound may include hemicellulose. The compound may include waste streams that include C-O-H compounds.

Processing the hydrogen gas may include burning the hydrogen gas. Processing the hydrogen gas may include feeding the hydrogen gas into a fuel cell.

Claimed embodiments include forming the wet compound through mixing water with the compound comprising carbon, oxygen, and hydrogen before heating the wet compound.

There is also disclosed but not claimed, a system for extracting hydrogen for further processing. The system may include: a processing chamber in thermal communication a heat source configured to heat a wet compound, the compound comprising carbon, oxygen, and hydrogen, such that elements comprised from the wet compound dissociate and react to form at least hydrogen gas; and/or an exhaust system configured to process the hydrogen gas.

The processing chamber in thermal communication the heat source may be configured to heat the wet compound such that elements comprised from the wet compound dissociate and react to form at least hydrogen gas through a non-oxidation reaction. The non-oxidation reaction may include a hydrous pyrolysis reaction.

The exhaust system configured to process the hydrogen gas may be configured to process the hydrogen gas to generate at least electrical power or heat. The exhaust system configured to process the hydrogen gas may be configured to process the hydrogen gas to produce liquid fuels

For the system, the compound may consist of carbon, oxygen, and hydrogen. The compound may include cellulose. The compound may include lignin. The compound may include hemicellulose. The compound may include a waste stream that includes C-O-H compounds.

The exhaust system configured to process the hydrogen gas may be configured to burn the hydrogen gas. The exhaust system configured to process the hydrogen gas may be configured to feed the hydrogen gas into a fuel cell.

The system may include a conveyor configured to transfer the wet compound to the processing chamber. The system may include a chamber configured to at least mix or combine water with the compound to form the wet compound before the processing chamber in thermal communication with the heart source heats the wet compound.

Also disclosed but not claimed, is a method for making a liquid fuel from a compound comprising carbon, oxygen, and hydrogen. The method may include: combining water with the compound to produce a wet form of the compound; transferring the wet form of the compound into a reaction processing chamber; and/or heating the wet form of the compound within the reaction chamber such that elements comprised by the wet form of the compound dissociate and react, wherein one reaction product comprises the liquid fuel.

Heating the heating the wet form of the compound within the reaction chamber such that elements comprised by the wet form of the compound may dissociate and react through a non-oxidation reaction. The non-oxidation reaction may include a hydrous pyrolysis reaction.

In some such methods, the compound may consist of carbon, oxygen, and hydrogen. The compound may include cellulose. The compound may include lignin. The compound may include hemicellulose. The compound may include a waste stream that includes C-O-H compounds.

Optionally, the liquid fuel includes methanol. Heating the wet form of the compound within the reaction chamber may include inducing the reaction $C_6H_{10}O_5 + 6H_2O \rightarrow CH_4O + 5CO_2 + 9H2$. Heating the wet form of the compound within the reaction chamber may include inducing the reaction $C_6H_{10}O_5 + 5H_2O \rightarrow 2CH_4O + 4CO_2 + 6H_2$. Heating the wet form of the compound within the reaction chamber may include inducing the reaction $C_6H_{10}O_5 + 4H_2O \rightarrow 3CH_4O + 3CO_2 + 3H_2$. Heating the wet form of the compound within the reaction chamber may include inducing the reaction $C_6H_{10}O_5 + 3H_2O \rightarrow 4CH_4O + 2CO_2$.

Optionally, the liquid fuel includes ethanol. Heating the wet form of the compound within the reaction chamber may include inducing the reaction $C_6H_{10}O_5 + 4H_2O \rightarrow C_2H_6O + 4CO_2 + 6H_2$. Heating the wet form of the compound within the reaction chamber may include inducing the reaction $C_6H_{10}O_5 + H_2O \rightarrow 2C_2H_6O + 2CO_2$.

Optionally, the liquid fuel includes propanol. Heating the wet form of the compound within the reaction chamber comprises inducing the reaction $C_6H_{10}O_5 + 2H_2O \rightarrow C_3H_8O + 3CO_2 + 3H_2$.

Optionally, the liquid fuel includes butanol. Heating the wet form of the compound within the reaction chamber comprises inducing the reaction $C_6H_{10}O_5 \rightarrow C_4H_{10}O + 2CO_2$.

Optionally, the liquid fuel includes gasoline. Heating the wet form of the compound within the reaction chamber may include inducing the reaction $C_6H_{10}O_5 + 4C + 4H_2O \rightarrow C_7H_{16} + 2CO_2$.

Optionally, the liquid fuel includes diesel. Heating the wet form of the compound within the reaction chamber may include inducing the reaction $C_6H_{10}O_5 + 10C + 2H_2O \rightarrow C_{16}H_{24} + 6CO_2$.

The method may include extracting a hydrogen gas that is another reaction product as an end product. Some methods include extracting a carbon dioxide gas that is another reaction product as an end product.

Also disclosed but not claimed, is a system for making a liquid fuel from a compound comprising carbon, oxygen, and hydrogen. The system may include at least: a processing chamber; a heating source in thermal communication with an interior of the processing chamber; a source of the compound disposed within the processing chamber; a source of water to wet the source of the compound; or a subsystem for controlling the heating source to induce a dissociation and reaction of the wet source of the compound, wherein one reaction product comprises the liquid fuel. The system may include an exhaust system for extracting at least the liquid fuel or resulting gases from the processing chamber.

The subsystem for controlling the heating source to induce the dissociation and reaction of the wet source of the compound may utilize a non-oxidation reaction. The non-oxidation reaction comprises a hydrous pyrolysis reaction.

In relation to the system, the compound may consist of carbon, oxygen, and hydrogen. The compound may include cellulose. The compound may include lignin. The compound may include hemicellulose. The compound may include a waste stream that includes C-O-H compounds.

In relation to the system, the liquid fuel may include methanol. Heating the wet form of the compound within the reaction chamber may include inducing the reaction $C_6H_{10}O_5 + 6H_2O \rightarrow CH_4O + 5CO_2 + 9H_2$. Heating the wet form of the compound within the reaction chamber may include inducing the reaction $C_6H_{10}O_5 + 5H_2O \rightarrow 2CH_4O + 4CO_2 + 6H_2$. Heating the wet form of the compound within the reaction chamber may include inducing the reaction $C_6H_{10}O_5 + 4H_2O \rightarrow 3CH_4O + 3CO_2 + 3H_2$. Heating the wet form of the compound within the reaction chamber may include inducing the reaction $C_6H_{10}O_5 + 3H_2O \rightarrow 4CH_4O + 2CO_2$.

In relation to the system, the liquid fuel may include ethanol. Heating the wet form of the compound within the reaction chamber may include inducing the reaction $C_6H_{10}O_5 + 4H_2O \rightarrow C_2H_6O + 4CO_2 + 6H_2$. Heating the wet form of the compound within the reaction chamber may include inducing the reaction $C_6H_{10}O_5 + H_2O \rightarrow 2C_2H_6O + 2CO_2$.

In relation to the system, the liquid fuel may include propanol. Heating the wet form of the compound within the reaction chamber comprises inducing the reaction $C_6H_{10}O_5 + 2H_2O \rightarrow C_3H_8O + 3CO_2 + 3H_2$.

In relation to the system, the liquid fuel may include butanol. Heating the wet form of the compound within the reaction chamber comprises inducing the reaction $C_6H_{10}O_5 \rightarrow C_4H_{10}O + 2CO_2$.

In relation to the system, the liquid fuel may include gasoline. Heating the wet form of the compound within the reaction chamber may include inducing the reaction $C_6H_{10}O_5 + 4C + 4H_2O \rightarrow C_7H_{16} + 2CO_2$.

In relation to the system, the liquid fuel may include diesel. Heating the wet form of the compound within the reaction chamber may include inducing the reaction $C_6H_{10}O_5 + 10C + 2H_2O \rightarrow C_{16}H_{24} + 6CO_2$.

In relation to the system, one resulting gas may include a hydrogen gas as an end product. One resulting gas may include a carbon dioxide gas as an end product.

Claimed embodiments include methods for extracting hydrogen from a compound comprising carbon, oxygen, and hydrogen. The method includes at least: introducing a source of the compound into a chamber; adding water for reacting with the compound; and heating the compound inside the chamber to dissociate the compound.

Heating the compound inside the chamber to dissociate the compound into a hydrogen gas utilizes a hydrous pyrolysis reaction.

Some embodiments of the method provide a flow of an inert gas to the chamber. The inert gas may include at least argon or nitrogen. The compound may include at least cellulose, lignin, hemicelluloses, or a waste product that includes carbon, oxygen, and hydrogen. The cellulose may include cellulose waste. A source of the cellulose may include corn. A source of the cellulose may include paper.

Some embodiments of the method process the hydrogen gas to generate electrical power. The method may include partially burning cellulose in the processing chamber that contains air until oxygen in the air inside the processing chamber is depleted. Some disclosed methods may involve a temperature of the chamber for the dissociation of cellulose that is approximately 325°C or above.

Disclosed methods may include at least: burning the hydrogen in the presence of oxygen to form water vapor and release energy; or burning the carbon in the presence of oxygen to form carbon dioxide and release energy. The water vapor may be converted into electrical power.

The method may include feeding the hydrogen gas into a fuel cell. The fuel cell may convert the hydrogen gas and an oxygen gas into water to produce heat. Some disclosed methods include using the hydrogen gas to improve automotive engine efficiency.

Disclosed methods include methods for the conversion of cellulose into hydrogen. The method may include at least: introducing a source of cellulose into a chamber; adding water into the chamber for reacting with the cellulose; heating the chamber to generate water vapor; causing a reaction between the water vapor and the cellulose to form a hydrogen gas and a carbon dioxide gas; or separating the hydrogen gas from the carbon dioxide gas.

The reaction include a hydrous pyrolysis reaction. The hydrogen gas may be burned in the presence of an oxygen gas to form water vapor and release energy. The water vapor may be converted into electrical power. The hydrogen gas may be fed into a fuel cell, the fuel cell converting the hydrogen gas and an oxygen gas into water vapor and producing electricity and heat. The cellulose may be partially burned in the processing chamber that contains air until oxygen in the air inside the processing chamber is depleted.

A flow of an inert gas may be provided to the chamber. The inert gas may include at least argon or nitrogen.

The water vapor may be formed at approximately 400°C or above. A source of the cellulose may include corn. A source of the cellulose may include paper. A source of the cellulose may include cellulose waste.

Also disclosed but not claimed, are systems for producing hydrogen from a compound comprising carbon, oxygen, and hydrogen. The system may include at least: a processing chamber; a heating source in thermal communication with an interior of the processing chamber; a source of the compound disposed within the processing chamber; a source of water for reacting with the compound; or an exhaust system for extracting resultant hydrogen gas and carbon dioxide gas from the processing chamber.

The heating source may be further configured to react the source of water with the compound utilizing a non-oxidation reaction. The non-oxidation reaction may include a hydrous pyrolysis reaction. The system may further include a combustion chamber configured to burn the hydrogen gas in the presence of oxygen to release heat energy and to form water vapor. The system may include a fuel cell for converting hydrogen gas into electrical power.

A source of the compound may include at least corn or paper. The system may include a gas delivery system configured to provide a flow of inert gas to the processing chamber. The inert gas may include at least argon or nitrogen. The compound may be partially burned in the processing chamber that contains air until oxygen in the air inside the processing chamber is depleted.

A source of water may be disposed within the processing chamber for reaction of the compound and water to form hydrogen and carbon dioxide. A source of the compound may include cellulose waste. The system may include a subsystem configured to process the hydrogen gas to produce electrical power.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Features which are believed to be characteristic of the concepts disclosed herein, both as to their organization and method of operation, together with associated advantages will be better understood from the following description when considered in connection with the accompanying figures. Each of the figures is provided for the purpose of illustration and description only, and not as a definition of the limits of the claims.

BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

FIG. 1A is a schematic diagram of a simplified system for conversion of C-O-H compounds into hydrogen and/or liquid gas (The conversion of C-O-H compounds into liquid gas is not part of the scope of the invention).

FIG. 1B is a schematic diagram of a simplified system for conversion of C-O-H compounds into hydrogen and/or liquid gas (The conversion of C-O-H compounds into liquid gas is not part of the scope of the invention).

FIG. 2 is a schematic diagram of a simplified system for hydrogen to be burned in a combustion chamber in accordance with various embodiments.

FIG. 3 is a schematic diagram of a simplified system for conversion of hydrogen gas into electrical power by a fuel cell in accordance with various embodiments.

FIG. 4A is a flow diagram that summarizes general aspects of methods for converting C-O-H compounds into hydrogen for power generation in accordance with various embodiments.

FIG. 4B is a flow diagram that summarizes general aspects of methods for converting C-O-H compounds into hydrogen for power generation in accordance with various embodiments.

FIG. 5 is a flow diagram that summarizes a first specific method of extraction of hydrogen from cellulosic biomass and steps of conversion of hydrogen into electrical power in accordance with various embodiments.

FIG. 6 is a flow diagram that summarizes a second specific method of extraction of hydrogen from cellulosic biomass and steps of conversion of hydrogen into electrical power in accordance with various embodiments.

FIG. 7. is a flow diagram that summarizes general aspects of methods for making liquid fuels from C-O-H compounds.

DETAILED DESCRIPTION

Methods and systems are disclosed for extracting hydrogen from a compound comprising carbon, oxygen, and hydrogen ("C-O-H"). The compound includes cellulose, lignin, hemicellulose and/or a waste stream which includes at least one C-O-H compound selected from paper waste, sawdust of wood, cardboard, hay, straw, switchgrass, municipal solid waste, sanitized waste and/or demolition and construction wood waste. Water is combined with the CO-H compound to produce a wet form of the C-O-H compound. The wet form of the C-O-H compound is transferred into a reaction processing chamber. The wet form of the C-O-H compound is heated within the reaction chamber such that elements of the C-O-H compound dissociate and react, with one reaction product comprising at least hydrogen gas. Claimed embodiments utilize hydrous pyrolysis reactions. The hydrogen gas may be utilized to generate electrical power, heat, or power different types of engines.

The ensuing description provides exemplary embodiments only, and is not intended to limit the scope, applicability or configuration of the disclosure. The scope of the invention is defined by the appended claims.

Specific details are given in the following description to provide a thorough understanding of the embodiments. However, it will be understood by one of ordinary skill in the art that the embodiments may be practiced without these specific details. For example, systems, networks, processes, and other elements in embodiments may be shown as components in block diagram form in order not to obscure the embodiments in unnecessary detail. In other instances, well-known processes, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but could also comprise additional operations not discussed or included in a figure. Furthermore, not all operations in any particularly described process may occur in all embodiments. A process may correspond to a method, a function, a procedure, a subroutine, a subprogram, etc. When a process corresponds to a function, its termination corresponds to a return of the function to the calling function or the main function.

Furthermore, embodiments may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine-readable medium. A processor(s) may perform the necessary tasks.

Merely for purposes of illustration, certain specific reactions involving the components of cellulosic biomass, also referred to as lignocellulose, including cellulose, hemicellulose and lignin and combinations thereof are described herein as an example of how the methods and processes disclosed may be implemented. The techniques have been found by the inventors, however, to be readily applicable more generally to C-O-H compounds and illustrations using any of these components or combinations thereof are not intended in any way to limit the scope of the invention, which is defined by the appended claims.

Different embodiments may include different combinations of biomass components. For example, combinations of cellulose, lignin, and/or hemicellulose may be used. Many biomass feedstocks may have one or more of a mixture of cellulose, lignin, hemicellulose and/or trace minerals in their component materials. The chemistries described above may thus govern the processing of the feedstock into a process gas stream of hydrogen and $CO_2$ and trace gases. Some embodiments may utilize feedstocks that include C-O-H, such as paper waste, sawdust of a wide variety of wood types, cardboard, hay, straw, switchgrass, municipal solid waste, sanitized waste, demolition and construction wood waste; these various feedstocks may generally be referred to waste products.

Some embodiments may utilize hydrous pyrolysis whose input may be a blend of lignocellulosic feedstocks and water. This may have similarities to many of the existing syn-gas production technologies with the advantages that the reaction may be combined into a single step, a high-hydrogen gas mixture may be produced, the process may be very tolerant to moisture in the input feedstock, and the resulting gas stream can be directly combusted in internal combustion engines.

For example, the biochemical composition of lignocellulosic feedstocks may have three main components: cellulose, lignin, and hemicellulose. Different feedstocks (which may include, but are not limited to, hardwoods, softwoods, grasses, fruits) may have different relative amounts of these three main classes of components. The following provides methods that may be used to calculate the ratio of water needed by each component of feedstock to minimize the solid carbon waste and generation of carbon monoxide in accordance with various embodiments. Using the prescribed amount of water in the reaction may generate a gas product mixture that can be directly combusted in reciprocating engines, and may maximize the generation of hydrogen molecules for bio-hydrogen production.

The general reaction class driven by a hydrous pyrolysis process for some embodiments may be described as:

$$C_xH_yO_z + (2x-z)H_2O = xCO_2 + (2x + y/2 - z)H_2.$$

So for each mole of lignocellulosic component to be completely converted to $CO_2$ and $H_2$, the number of moles of water required may be described as 2x-z.

The dominant structures in the biochemical composition of lignocellulosic materials and the water for complete reaction may be as follows and are provided merely as examples:

| Biochemical Component | Chemical Formula | Molecular Mass (g/mol) | Weight Percent of Feedstock | Moles of water required per mole of component | Comments |
|---|---|---|---|---|---|
| Cellulose | $C_6H_{10}O_5$ | 162 | 33-50% | 7 (77.78 wt%) | More in hardwoods |
| Lignin | $C_{9+n}H_{10+3n}O_{2+n}$ | 150 + 31n | 15-25% | $16+n$ (wt%= $\dfrac{[18(16+n)]}{[150+31n]}$ | 0.9<n<1.4 depending on feedstock |
| Xylan | $C_{17}H_{36}O_8$ | 368 | 5-11% | 26 (127 wt%) | More in hardwoods |
| Glucomannan | $C_{35}H_{49}O_{29}$ | 933 | 1-20% | 41 (79 wt%) | Mostly in softwoods |

For a biomass feedstock with component weight percentages of C% cellulose, L% lignin, G% glucomannan, and X% xylan, the mass water $M_w$ to be added per mass of dry input feedstock mass may be:

$$M_w = \{\, 0.7778C + [18(16+n)/(150+31n)]L + 0.79G + 1.37X]\}\, M_F.$$

Merely by way of example, for a hardwood with 45% cellulose, 30% lignin with n=1.2, 2% glucomannan, and 23% xylan, the weight percentage of water to bone-dry cellulosic mass may be 117.59% for complete reaction.

For an input feedstock that is not bone dry (the normal situation) with W% weight percent water, the dry mass of cellulosic feedstock $M_F$ found in the total delivered feedstock $M_T$ may be described as:

$$M_F = (1-W)\, M_T.$$

So for a delivered mass $M_T$ of feedstock at W weight percent water, the remaining mass of water to be added $M_A$ may be:

$$M_A = M_w - W\, M_T.$$

$$= M_T\, (1-W)(\, 0.7778C + [18(16+n)/(150+31n)]L + 0.79G + 1.37X]) - W\, M_T$$

$$= M_T\, \{(1-W)(\, 0.7778C + [18(16+n)/(150+31n)]L + 0.79G + 1.37X]) - W\}.$$

A feed stock may also and/or alternatively be characterized by an ultimate elemental analysis, rather than the biochemical composition used in the section above. In this case, the weight percentage of the chemical elements found in the feedstock may be provided by the analysis. If the information may be provided in this manner, the following provides an example for pine sawdust of the input to the analysis:

| Chemical Element | Weight percentage (dry) |
|---|---|
| c | 51.3 |
| H | 6.13 |
| O | 42 |
| N | .12 |
| S | .02 |
| Cl | .07 |

(continued)

| Chemical Element | Weight percentage (dry) |
|---|---|
| F | - |
| Br | - |
| Total | 99.64 |

Because the participant in the reactions of interest are mainly C, H, and O, and because these elements are over 99% of the dry mass of the feedstock, one may consider only those elements when determining the mass of water to be added to the input feedstock. For an input feed stock with dry mass weight percentage %C of carbon, %H of hydrogen, and %O of oxygen, and using a proto-molecule of $C_xH_yO_z$, the reaction of interest may be described as:

$$C_xH_yO_z + (2x-z)H_2O = xCO_2 + (2x + y/2 - z)H_2$$

So for each mole of lignocellulosic component to be completely converted to $CO_2$ and $H_2$ the number of moles of water required is 2x-z.

To find the values of x, y, and z using the ultimate elemental analysis, the following can be calculated for a molar mass of 1g/mole of input feedstock:

$$x = \%C/mass(C)$$

$$y = \%H/mass(H)$$

$$z = \%O/mass(O).$$

The number of moles of water required to react all of the carbon atoms to carbon dioxide is 2x-z, which may be represented as:

$$moles\ (H_2O) = 2\%C/mass(C) - \%O/mass(O).$$

The mass percentage of water $M_w$ to be added relative to the dry input feedstock mass may be thus:

$$M_w = [mass(H_2O) \times (2\%C/mass(C) - \%O/mass(O))]\ M_F.$$

For the example feedstock of pine sawdust, the equation evaluates as:

$$moles\ (H_2O) = .085 - .02625 = 0.05875$$

mass $(H_2O)$ = 18.

$$M_w = 1.0575\ M_F.$$

For an input feedstock that is not bone dry (the normal situation) with W% weight percent water, the dry mass of cellulosic feedstock $M_F$ found in the total delivered feedstock $M_T$ may be described as:

$$M_F = (1-W)\ M_T.$$

So for a delivered mass $M_T$ of feedstock at W weight percent water, the remaining mass of water to be added $M_A$ may be:

$$M_A = M_w - W\,M_T$$

$$= M_T\,(1-W)\,[mass(H_2O) \times (2\%C/mass(C) - \%O/mass(O))] - W\,M_T$$

$$= M_T\,\{(1-W)[mass(H_2O) \times (2\%C/mass(C) - \%O/mass(O))] - W\}.$$

Merely by way of example, for 1 tonne of pine sawdust at 25% moisture content, the mass of water to be added may be:

$$M_A = 1\{0.75(1.0575) - .25\}$$

$$= 0.543 \text{ tonne}.$$

So for the input tonne of delivered feedstock, there may be 750kg of dry feedstock and 250 kg of water. By adding 543 liters of water (543 kg), for example, the total mass of water may be 793kg, or 105.73% of the input dry mass of feedstock, insuring that all carbons may be reacted into carbon dioxide in the pyrolysis process.

Reaction 1 of Conversion of Cellulose into Hydrogen

Cellulose has a molecular formula of $C_6H_{10}O_5$. One possible reaction is that cellulose is disassociated in an inert gas atmosphere or with minimal other gases present upon heating to release $H_2O$ and to generate carbon residue. The reaction may be described by:

$$C_6H_{10}O_5 \rightarrow 6C + 5\,H_2O.$$

However, when started the inventors studied carbonizing cotton for production of carbon fiber, about 15 kg of cotton was introduced to a heating chamber. When the heating cycle ended, about 3 kg of the carbonized cotton was left. It was puzzling that the average yield of the carbon content was 20%-25% at the time of the experiment.
A further understanding of this observation in this experiment leads to the present invention. If the carbon consumes all the oxygen in the cellulose to form carbon dioxide ($CO_2$), the reaction may be described by:

$$2C_6H_{10}O_5 \rightarrow 5\,CO_2 + 7C + 10H_2.$$

Hence, the remaining carbon may be calculated by using molecular weight as follows:

$$(7 \text{ moles} \times M_r \text{ of carbon})/(2 \text{ moles} \times M_r \text{ of cellulose}) = (7 \times 12)/(2 \times 162) = 26\%.$$

In addition, if the carbon consumes all the oxygen in the cellulose to form carbon monoxide (CO), the reaction may be defined by:

$$C_6H_{10}O_5 \rightarrow 5CO + C + 5\,H_2.$$

The remaining carbon may be estimated as below:

$$M_r \text{ of carbon}/M_r \text{ of cellulose} = 12/162 = 7\%.$$

Therefore, it is likely that the dominant reaction during cellulose heating (pyrolysis) may result in a mixture of CO and $CO_2$, with $CO_2$ dominant in the mixture. Hence, cellulose heated in an inert gas may result in the following chemical reaction:

$$2C_6H_{10}O_5 \rightarrow 5\,CO_2 + 7C + 10H_2 \qquad \text{(Reaction 1a)}.$$

Additional reactions for hydrogen to be combusted to form water and for carbon to be combusted to form carbon dioxide are defined as below:

$$2H_2 + O_2 \rightarrow 2H_2O \qquad \text{(Reaction 1b)}$$

$$C + O_2 \rightarrow CO_2 \qquad \text{(Reaction 1c)}.$$

Thermochemistry is generally a study of energy changes that occur during chemical reactions. If energy is transferred as heat at constant volume, and no work is done, the change of internal energy produced is equal to the heat transferred. For a specified change of state $\Delta U$ independent of any process, $(\Delta U)_v = q_v$ defined by the first law of thermodynamics. If energy is transferred as heat at constant pressure, the quantity of energy transferred can be identified with a change of enthalpy. Therefore, as long as no other work is being done, $\Delta H = q_p$. The enthalpy change accompanying a reaction is called the reaction enthalpy ($\Delta H$). An enthalpy of formation is the reaction enthalpy when a compound is formed from its elements. For a reaction with several reactants and products, the enthalpy change $\Delta H$ refers to the overall process as follows:

$$\text{(unmixed reactants)} \rightarrow \text{(unmixed products)}$$

The reaction for which $\Delta H>0$ are called endothermic; those for which $\Delta H<0$ are called exothermic.

The table below lists the enthalpy of formation for compounds such as carbon dioxide ($CO_2$), water ($H_2O$), and cellulose ($C_6H_{10}O_5$) and the molecular weight per mole of the compounds. It also lists the specific heat of the compounds and enthalpy of vaporization of water. Such data provided in the table are used for calculations of the energy required to heat cellulose and to form water vapor at elevated temperatures.

| | Enthalpy of Formation (kJ/mol) | Molecular Weight (gram/mol) | Specific Heat $C_p$ (J/K/mol) | Enthalpy of Vaporization (kJ/mol) |
|---|---|---|---|---|
| $CO_2$ | -393.5 | 44 | | -- |
| $H_2O$ (g) | -241.8 | 18 | 33.58 | -- |
| $H_2O$ (l) | -285.8 | 18 | 75.29 | 40.7 |
| Cellulose ($C_6H_{10}O_5$) | -87.2 | 162 | 230 | -- |

Referring to reaction 1a now, by using the enthalpy of formation, the energy release for 2 moles of cellulose may be estimated to be as follows:

$$\Delta H1 = 5\,(-393.5) - 2\,(87.2) = -2141.8 \text{ kJ}$$

If the remaining hydrogen is burned to form water in Reaction 1 b, additional energy released for 2 moles of cellulose may be calculated as:

$$\Delta H2 = 10\,(-241.8) = -2418.3 \text{ kJ}$$

Therefore, the energy release for 2 moles of cellulose may be

$$\Delta H = \Delta H1 + \Delta H2 = -4560.1 \text{ kJ}$$

The energy release for 1 mole of cellulose in reactions 1a and 1b is thus -2280 kJ/mol.

If it requires an energy of 92 kJ/mol to heat cellulose, as this may be calculated by the specific heat $C_p$ and temperature change for cellulose using the following equation:

$$\Delta U = C_p\,\Delta T = 230 \text{ J/K/mol} * 400K = 92,000 \text{ J/mol} = 92 \text{ kJ/mol}$$

Then, the net energy release for cellulose to be burned in inert gas may be:

$$\Delta H3 = -2280 + 92 = -2188 \text{ kJ/mol} = -2188/162 \text{ kJ/g} = -13.51 \text{ kJ/g}$$

In addition, the residue of 3.5 moles of carbon (or 3.5 * 12 = 42 grams of carbon) for a mole of cellulose may be potentially burned to form carbon dioxide and to release additional energy that may be:

$$\Delta H4 = -3.5 * 393.5 = -1377.3 \text{ kJ/mol} = -1377.3/162 \text{ kJ/g} = -8.5 \text{ kJ/g}$$

The total energy release for cellulose may be estimated by:

$$\Delta H4 + \Delta H3 = -13.51 - 8.5 = -22.0 \text{ kJ/g}$$

The inventors have performed experiments by using nitrogen gas instead of argon to displace air, because nitrogen gas costs less than argon gas. However, the average yield of carbon may be dropped to 17% from 20-25% when gas is switched from argon to nitrogen, which may be due to the formation of CN, or perhaps nitrogen may not displace oxygen as well as argon gas. Nonetheless, some embodiments may utilize different inert gases to displace some or all of the air within a system.

Hydrous Pyrolysis for the production of Hydrogen from Cellulose

A possible reaction for generating hydrogen from cellulose by adding liquid water to the cellulose and heating the combination may be defined by:

$$C_6H_{10}O_5 + 7\ H_2O \rightarrow 6\ CO_2 + 12\ H_2 \qquad \text{(Reaction 2a)}.$$

The combination may be heated to about 1000°C. This hydrous pyrolsis reaction results in the production of hydrogen. Other non-oxidation reactions may also be utilized in some embodiments to produce hydrogen. Hydrogen may be subsequently burned in oxygen defined by:

$$2H_2 + O_2 \rightarrow 2H_2O \qquad \text{(Reaction 2b)}.$$

In reaction 2a, the net enthalpy of the reaction has been calculated as 1241 kJ/mol.
When the hydrogen burn in Reaction 2b is considered, the following energy may be released:

$$\Delta H = 12(-241.8) = -2902 \text{ kJ/mole}.$$

Thus the net energy generation is 1661 kJ/mole cellulose. For each gram of cellulose consumed the following energy may be released:

$$\Delta H = 3108 \text{ kJ/ } 162g \text{ Cellulose}$$

$$= 10.25 \text{ kJ/g cellulose}.$$

The net thermal energy released by burning the hydrogen produced from cellulose via the CHyP reaction may be described as:

$$(10.25 \text{ kJ/g})(1,000,000 \text{ g/tonne})(1 \text{ MW-hr/3,600,000 kJ}) = 2.84 \text{ MW-hr/tonne}.$$

The above analysis may show the thermodynamics of different embodiments works favorably. Embodiments may thus address many of the issues identified as problems in the gasification space.
For example, some embodiments may provide simplified designs that favor scalability over a very wide range from home unit size to commercial power production. Some embodiments may focus on the thermal issues causing heat losses that tend to make gasification technologies inefficient. Although some embodiments may produce excess heat, heat losses to the environment and through the exiting gases may be accounted for. Because of the exothermic nature, the leverage of thermal power out from the input power may be over 10.

Some embodiments may be optimized to minimize tar production as well as CO and $C_xH_y$. For some embodiments, cellulose that contains water may be a benefit, not an energy consuming issue as with most biomass energy processes in which drying of the feedstock is required to minimize water content. The feedstock in many embodiments may need not be dried before processing. By generating hydrogen on-demand in some embodiments, the benefits of hydrogen may be realized without the difficulties normally associated with hydrogen, mainly the storage and distribution issues. Because the produced gas contains $CO_2$, the dilution of the hydrogen may actually benefit the burning in an internal combustion engine in some embodiments through reduction of flame temperature and speed, and the subsequent reduction of $NO_x$ pollutants. The flame produced from combusting the product gas may contain a small amount of $C_xH_y$ and CO that makes the normally invisible flame visible, rendering the handling safer in some embodiments.

Lignin and/or hemi-cellulose in cellulosic biomass may also serve as effective sources of hydrogen. Since these may be waste products from several sources, in particular, cellulose to ethanol production, this could be an effective addition to the renewable energy picture using the processes described herein.

Hydrous Pyrolysis for the production of Hydrogen from Lignin

Lignin has a nominal composition: $C_9H_{10}O_2(OCH_3)_n$ where n is the ratio MeO:C9, which is the ratio of methoxylated groups to phenylpropanoid groups in the lignin. The value of n may be roughly 0.94 for softwoods and paper, 1.18 for grasses, and 1.4 for hardwoods, merely by way of example. Using the equivalency to re-write the lignin formula may result in the following:

$$C_9H_{10}O_2(OCH_3)_n = C_{9+n}H_{10+3n}O_{2+n}.$$

In accordance with various embodiments, a CHyP hydrogen generator may drive the following reaction:

$$C_{9+n}H_{10+3n}O_{2+n} + (16 + n) H_2O => (9+n) CO_2 + (21 + 2.5n) H_2 \qquad \text{(Reaction 3a)}.$$

Merely by way of example, for n=1, this corresponds to adding enough water to the lignin to bring the composition of the wet compound to 62.8 wt% water.

The net enthalpy of this reaction at 1000°C output temperature may be described as:

$$(9+n)(-393.5) + (21 + 2.5n)(29.1) + 1592 + (16+n)(285.8) = 2008 - 34.95n \text{ kJ/mol.}$$

However, when the hydrogen burn is considered, the following energy may be released:

$$\Delta H = 21+2.5n(-241.8) = -5078 – 605n \text{ kJ/mole.}$$

Thus for n=1, merely by way of example, the net energy generation is 5683 - 1973 = 3710 kJ/mole lignin. For each gram of lignin consumed the following net energy may be released:

$$\Delta H = 3710 \text{ kJ/ } 181g \text{ lignin} = 20.5 \text{ kJ/g lignin.}$$

The net thermal energy released by burning the hydrogen produced from lignin via this reaction may be described as:

$$(11 \text{ kJ/g})(1,000,000 \text{ g/tonne})(1 \text{ MW-hr/3,600,000 kJ}) = 3.05 \text{ MW-hr/tonne.}$$

Hydrous Pyrolysis for the production of Hydrogen from Hemicelluloses

Hemicelluloses in lignocellulosic feedstocks may also serve as an effective source of hydrogen. Hemicelluloses are polysaccharides composed of sugars, that may include, but are not limited to, glucose, xylose, mannose, galactose, rhamnose, arabinose, and glucomannan. The chemical formula for these sugar building blocks may be described as $C_5H_{10}O_5$ and $C_6H_{12}O_6$. Common hemicellulosic materials in North American lignocellulosic biomass include xylan ($C_{17}H_{36}O_8$) and glucomannan ($C_{35}H_{49}O_{29}$). Because exact bond dissociation energies for the many hemicellulose polysaccharides may depend on their exact chemical composition and environments, the average values for cellulose (mass-weighted) may be used in the following analyses.

Hydrogen from Xylan

The chemical formula for xylan may be described as $C_{17}H_{36}O_8$ and the reaction driven by some embodiments may be described as:

$$C_{17}H_{36}O_8 + 26\ H_2O = 17\ CO_2 + 44\ H_2.$$

This corresponds to adding enough water to the xylan to bring the composition of the wet compound to 56 wt% water, merely by way of example. Some embodiments may involve creating a wet compound with different water percentages.
The net enthalpy of this reaction at 1000°C output temperature may be 3854 kJ/mol.
However, when the hydrogen burn is considered, the following energy may be released:

$$\Delta H = 44(-241.8) = -10,640\ kJ/mole.$$

The net energy generation may be 10640 - 3854 = 6786 kJ/mole xylan. For each gram of xylan consumed the following energy may be released:

$$\Delta H = 6786\ kJ/\ 368g\ xylan$$

$$= 18.44\ kJ/g\ xylan.$$

The net thermal energy released by burning the hydrogen produced from xylan via the CHyP reaction may be described as:

$$(18.44\ kJ/g)(1,000,000\ g/tonne)(1\ MW\text{-}hr/3,600,000\ kJ) = 5.12\ MW\text{-}hr/tonne.$$

Hydrogen from Glucomannon

The chemical formula for glucomannan may be described as $C_{35}H_{49}O_{29}$ and the reaction driven by some embodiments may be described as:

$$C_{35}H_{49}O_{29} + 41\ H_2O = 35\ CO_2 + 65.5\ H_2.$$

This corresponds to adding enough water to the glucomannan to bring the composition of the wet compound to 44.13 wt% water, merely by way of example. Alternative methods may involve creating a wet compound with different water percentages.
The net enthalpy of this reaction at 1000°C output temperature may be 6885 kJ/mol.
However, when the hydrogen burn is considered, the following energy may be released:

$$\Delta H = 65.5(-241.8) = -15,840\ kJ/mole.$$

The net energy generation may be 15,840 - 6885 = 8955 kJ/mole glucomannan. For each gram of glucomannan consumed the following energy may be released:

$$\Delta H = 8955 \text{ kJ/ } 933\text{g glucomannan}$$

$$= 9.6 \text{ kJ/g glucomannan.}$$

The net thermal energy released by burning the hydrogen produced from glucomannan via the CHyP reaction may be:

$$(9.6 \text{ kJ/g})(1{,}000{,}000 \text{ g/tonne})(1 \text{ MW-hr}/3{,}600{,}000 \text{ kJ}) = 2.67 \text{ MW-hr/tonne.}$$

The following table provides, merely by way of example, hydrogen and energy yields from biomass feedstock by biochemical component:

| Biochemical Component | Grams water required per gram component | Input Reaction Energy Required (kJ/g component) | $H_2$ Yield (g $H_2$ per gram component) | Gross Energy Yield (kJ/g component) | Net Energy Yield (kJ/g component) | Comments |
|---|---|---|---|---|---|---|
| Cellulose | 0.79 | 7.66 | 0.148 | 17.91 | 10.25 | More in hardwoods |
| Lignin | [18(16+n)] [150+31n] (=1.69, n=1) | [2008-35nn)] [150+31n] (=10.9, n=1) | [21+2.5n] [150+31n] (=0.13, n=1) | 5078+605n 150+31n (=31.4, n=1) | 3070+640n 150+31n (=20.5, n=1) | 0.9<n<1.4 depending on feedstock |
| Xylan | 1.27 | 10.47 | 0.239 | 28.91 | 18.44 | More in hardwoods |
| Glucomannan | 0.79 | 7.38 | 0.140 | 10.63 | 9.6 | Mostly in softwoods |

For some disclosed methods, an expression of expected hydrogen yields for an input lignocellulosic biomass feedstock of C% cellulose, L% lignin, X% xylan, and G% glucomannan may be determined using the following equation:

$$\text{Mass } (H_2) = \{0.148C + [(21 + 2.5n)/(150+31n)]L + .239X + .14G\} \text{Mass (dry feedstock)}.$$

For hybrid poplar, merely by way of example, with C=.47, L=.3, X=.18, G=.05 and n=1.3,

$$\text{Mass } (H_2) = 0.148(.47) + 0.127(.3) + .239(.18) + .14(.05)$$
$$= 0.158 \text{ Mass(dry feedstock)}$$

$$\text{Net energy yield} = 10.25(.47) + 20.5(.3) + 18.44(.18) + 9.6(.05)$$

$$= 14.77 \text{ kJ/gram of dry feedstock.}$$

For Alamo switchgrass, merely by way of example, with C=.41, L=.27, X=.27, G=.05 and n=1,

$$\text{Mass } (H_2) = 0.148(.41) + 0.13(.27) + .239(.27) + .14(.05)$$
$$= 0.167 \text{ Mass(dry feedstock)}$$

$$Net\ energy\ yield = 10.25(.41) + 20.5(.27) + 18.94(.27) + 9.6(.05)$$

$$= 15.33\ kJ/gram\ of\ dry\ feedstock.$$

Some embodiments may utilize a variety of other feedstock materials that include C-O-H. The range of feed stock may include, but is not limited to: paper waste, sawdust of a wide variety of wood types, cardboard, hay, straw, switchgrass, municipal solid waste, simulated nuclear waste, demolition and construction wood waste. Some embodiments may utilize sanitized waste. According to some options, the materials can be changed on the fly with little loss of power or efficiency.

Merely by way of example, materials processed such as demolition and construction wood waste bond any toxic materials in the biochar may result in a >90% reduction in their waste stream while tying up the toxic materials into a form that allows safe disposal without costly leaching barriers. In addition biomass streams containing sulfur may be processed without the production of hydrogen sulfide, making the system extraordinarily useful in processing a wider than normal range of materials. For instance, it may be possible to process automotive tires. With additional processing controls to tie up the chlorine, it may be possible to process PVC materials. Other materials that may be utilize include, but are not limited to: all wood types, all plastics, waste materials from Palm Oil production, sugar cane production, corn stover, and/or basically any biomass material including eventually manures.

There is provided methods and systems not according to the invention for making liquid fuel from compounds that comprise carbon, oxygen, and hydrogen. The liquid fuel is collected, but a byproduct of the methods and systems includes the production of molecular hydrogen, which may also be collected and used in energy production.

Merely for purposes of illustration, certain specific reactions involving cellulose are described herein as examples of how the methods and processes, not according to the invention, disclosed may be implemented. The techniques may, however, be readily applicable more generally to C-O-H compounds. For example, the techniques may be readily applicable to C-O-H compounds such as cellulosic biomass, also referred to as lignocellulose, including hemicellulose and lignin, along with cellulose, and combinations thereof. Other C-O-H compounds may also be utilized, such as waste streams.

Examples of the reactions that may be used may include, but are not limited to, the following.

Production of Methanol

$$C_6H_{10}O_5 + 6H_2O \rightarrow CH_4O + 5CO_2 + 9H_2$$

$$C_6H_{10}O_5 + 5H_2O \rightarrow 2CH_4O + 4CO_2 + 6H_2$$

$$C_6H_{10}O_5 + 4H_2O \rightarrow 3CH_4O + 3CO_2 + 3H_2$$

$$C_6H_{10}O_5 + 3H_2O \rightarrow 4CH_4O + 2CO_2$$

Production of Ethanol

$$C_6H_{10}O_5 + 4H_2O \rightarrow C_2H_6O + 4CO_2 + 6H_2$$

$$C_6H_{10}O_5 + H_2O \rightarrow 2C_2H_6O + 2CO_2$$

Production of Propanol

$$C_6H_{10}O_5 + 2H_2O \rightarrow C_3H_8O + 3CO_2 + 3H_2$$

Production of Butanol

$$C_6H_{10}O_5 \rightarrow C_4H_{10}O + 2CO_2$$

Production of Gasoline

$$C_6H_{10}O_5 + 4C + 4H_2O \rightarrow C_7H_{16} + 2CO_2$$

Production of Diesel

$$C_6H_{10}O_5 + 10C + 2H_2O \rightarrow C_{16}H_{24} + 6CO_2$$

In some instances, the above reactions may make use of water in addition to one or more C-O-H compounds, such as cellulose, and may proceed by providing a wet form of the cellulose. In other instances, a source of carbon is provided with the cellulose as one of the reactants.

Systems for Extraction of Hydrogen or Liquid Fuel from C-O-H Compounds and Conversion into Electrical Power or Heat Generation

Energy production from biomass generally takes one of three approaches: direct combustion of biomass for heat and/or electricity generation, pyrolytic gasification of biomass for combustion for heat and/or electricity production, or conversion of biomass into liquid fuels for future combustion. Many of these approaches start with the production of a synthesis gas, and some use the water shift reaction to enhance the reaction, particularly for the production of liquid fuels.

The economics of biomass are sufficiently favorable such that 11 GW of electrical generation is currently utilized in the U.S. However, the bulk of that installed capacity utilizes steam generation and the average biomass plant is 20 MW with about 20% (what-to-what) efficiency. The operations are trending toward larger plant size to increase the efficiencies.

In addition there are several research teams that are trying to extract hydrogen from cellulose. These efforts are based around (a) microbial digestion and (b) the use of NaOH and a catalyst to facilitate a reaction that releases hydrogen and captures the carbon as sodium carbonate. More extensive efforts are being expended in several pilot facilities, to process the cellulose into ethanol.

Many companies in the food processing, wood processing, and paper processing sectors have significant byproducts of their processes which have little or negative value to their main enterprise. At the same time, electrical power costs to the industrial sector are rising at 5% per year, and with looming carbon dioxide emissions regulations, these rates promise to grow even more quickly in the coming decade. Many of the processing byproducts have to be disposed of in some manner, generating tipping fees or other disposal expenses.

Options available for distributed generation to alleviate facility energy costs are often not economical enough to significantly impact the energy budget of a facility, or to make an impact on waste stream reduction. In some cases, direct combustion of waste products is used to generate heat and steam for processes, but no generally economical renewable energy electrical generation options are available. Electricity from photovoltaics costs about $200/MWh after application of the 30% federal investment tax credit, and using diesel generators for combined-heat-and-power systems exposes the companies to fuel price fluctuations for diesel fuel, and promotes national energy dependency. The most economical systems are combined-heat-and-power (CHP) systems fueled by natural gas, and these are most common in large institutional buildings such as universities, schools, and hospitals. For commercial and industrial settings, the ability to generate electricity economically separately from process heat requirements would open significant market opportunities.

In accordance with various embodiments, a two-step process for the conversion of cellulosic biomass to hydrogen may be involved. Claimed embodiments include a novel type of hydrous pyrolysis process that differs from prior art processes common in scientific literature or available commercially. In one aspect, the process may be applicable to most of the components of the cellulosic biomass, including the cellulose, hemi-cellulose and lignin portions.

The clean energy system developed for this process may involve a gasifier useful for customer-sited distributed generation. The system may convert cellulosic biomass to a hydrogen-rich gas stream that can be directly combusted to produce heat and/or power. Ranging in power from 500kW to 5MW, merely by way of example, these systems may be sold to business customers with cellulosic biomass waste streams such as woody waste, agricultural byproducts, and paper waste. Other customers may include, but are not limited to, community-scale independent power producers, and institutions seeking affordable on-site renewable energy options.

An operating prototype of a gasifier in accordance with various embodiments may generate continuous output streams of hydrogen from multiple cellulose sources at rates up to 450 $kW_{th}$ (thermal) for an input pyrolysis power of only 12kW, merely by way of example. The gas mixture produced may contain 65% hydrogen, 30% carbon dioxide, and 5% other components and the prototype directly feeds an electrical generator running at 9 kWe (electrical). The gas produced by the system may be higher in energy content than other pyrolysis gases, and the process is carbon-neutral with water vapor as the primary emissions component.

Disclosed methods may include multiple stages that may be involved from providing a feed stock to final production of electrical generation, merely by way of example. Methods may involve a pyrolysis system (Cellulosic biomass to Hydrogen Pyrolysis system, or CHyP system) that may generate a hydrogen-rich gas stream from biomass as needed for power and heat generation. The measured composition of the gas stream (65% hydrogen, 30% carbon dioxide, and 5% ash, tars, and hydrocarbons) may be ideal for combustion in reciprocating engines for power generation. This gas stream may be evolved in a single process step from mechanically and chemically prepared cellulosic waste or biomass, and after removing the ash and tars the gas is fed into an internal combustion (IC) engine. The presence of $CO_2$ in the gas stream may be quite beneficial for this application, as it may act as a buffer gas, keeping temperatures in their specified range for IC engines. If the gas stream had more combustible elements than this, the resulting temperatures in the engine would rise to levels that would generate elevated $NO_x$ emissions and reduce the lifetime of the engine.

An important aspect may be the ability to generate hydrogen from a feedstock at small scales (500kW to 5MW, for example) for distributed applications. Most other cellulose or biomass generation approaches can operate economically only at large scales. The ability to operate at any scale may address applications not available to current approaches. The potential market opportunities may include, but are not limited to: Residential: heat, electricity, or combined heat and power (CHP) systems; Merchant Power: electricity or district CHP; Hydrogen Supply: hydrogen gas; Industrial: heat, electricity, or CHP; Commercial: heat, electricity, or CHP.

Because of the exothermic nature of the overall process, the leverage of thermal power out from the input power may be over a factor of 20 from prior art gasification technologies that have focused on the thermal issues resulting in heat losses. Increased flexibility of input biomass sections may result from the process and equipment being tolerant to water. A beneficial byproduct of the process and equipment may be the minimization of the emission of tars. With on-site hydrogen generation, the benefits of hydrogen may be realized without the difficulties of storage and distribution. Because the CHyP syngas may contain 30% $CO_2$, the dilution of the $H_2$ may result in combustion temperatures suitable for existing internal combustion engines, keeping the $NO_x$ emissions within acceptable limits and not degrading engine components.

The process and pyrolysis unit may produce a hydrogen syngas that may be used to supply a hydrogen mix to an application as the gas is ready to consume. The hydrogen syngas can be burned in internal combustion engines to generate heat or electricity. This electrical generation application may be used to provide the electrical power from cellulosic biomass such as switchgrass for the integrated biorefinery operations, improving the embedded emissions balance of the resulting fuels. The electricity produced may be either used in the biorefinery plant or metered back to the grid in an amount at least equivalent to that utilized by all of the operations in the integrated biorefinery, merely by way of example. Because the hydrogen may be generated as needed, no hydrogen storage may be required for some embodiments and consequently no high pressure hydrogen storage concerns.

Some systems used in the method of the invention may include a condenser at the end of the CHyP hydrogen generator to capture any excess water and tars, and, optionally, may utilize this design to generate liquid fuels. Some embodiments may be capable of producing alcohols where the reactions may be controlled to produce the alcohol of choice.

A principal attractive feature of the hydrogen extraction approach may be that the simplicity of gasifier design and a process which is continuous, allows for reproducible results, and may be easily scalable. In addition, prior developments on the CHyP process and apparatus have resulted in well-engineered feed rate technology that would enhance the quality and reproducibility of results. Sizing and milling processes for the feedstock may be initially utilized to produce prepared feedstocks for the CHyP converter but the developed processes may be translated well for use in the Cellulosic biomass to Liquid Fuel (CeLF) reactors.

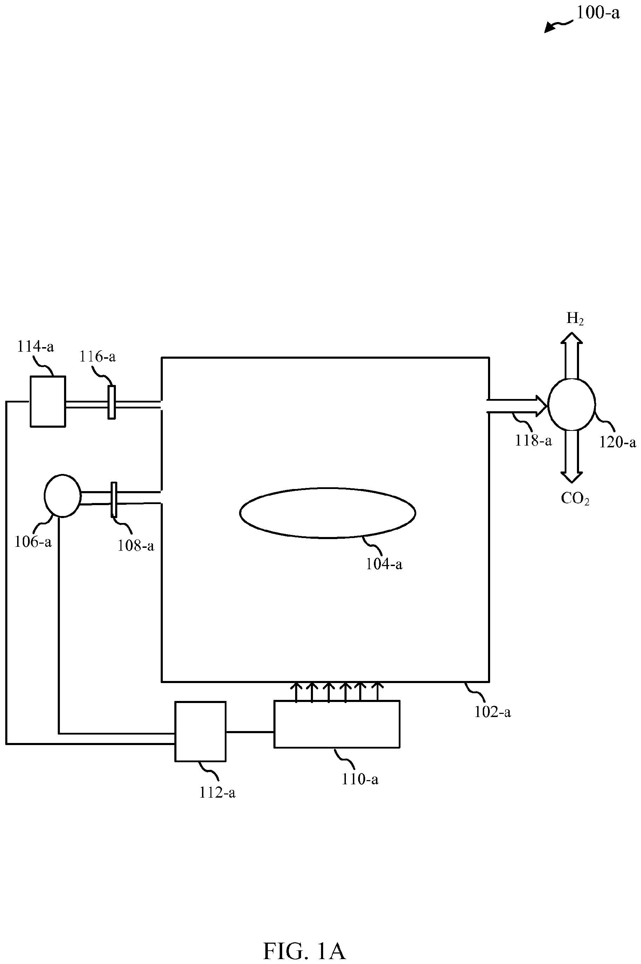

A general overview of a simplified system 100-a for conversion of a C-O-H compound into hydrogen in accordance with various embodiments is provided with **FIG. 1A.** The system 100-a may include a chamber 102-a, a heating system 110-a in a thermal communication with the chamber 102-a, an optional gas supply line 114-a for providing inert gas into the chamber 102-a, a water supply line 106-a for water to be added to the chamber 102-a by using valve 108-a, an exhaust line 118-a to allow the product gases (such as $H_2$ and $CO_2$, depending on the specific compound(s) used) to exit the chamber 102-a to flow into an optional gas separator 120-a, and a controller 112-a. The C-O-H compound 104-a may be disposed within the chamber 102-a. Examples of C-O-H compounds 104-a that may be found suitable for methods in accordance with various embodiments include, but are not limited to, sources of cellulose, hemicellulose, and/or sources of lignin. The C-O-H compound may include waste streams that include C-O-H compounds. As described further below, some processes may use an inert gas, and the controller 112-a may control when to continuously purge chamber 102-a with inert gas by using a valve 116-a. The controller 112-a may also control the heating system 110-a to provide the elevated temperatures that the chamber needs to cause the C-O-H compound 104-a to be dissociated in the environment within the chamber 102-a. The controller 112-a may also control the rate of speed of the insertion of wetted feedstock into the chamber 102-a. The controller 112-a may further control the temperature of the heating system 110-a to convert the water in the wetted feedstock into water vapor and to heat the C-O-H compound 104-a to cause the chemical reaction of the C-O-H compound 104-a with water. The gas separator 120-a may be used to separate the products of the reaction (e.g., $H_2$ and $CO_2$ gases and perhaps other reaction products) after the gases ($H_2$, $CO_2$) exit the chamber 102-a.

During the biomass processing, the system 100-a may run at atmospheric pressure to very slightly positive pressure, up to about 10 torr positive pressure. This may serve to minimize leaks in the system and significantly reduces the risk of an escalating pressure event. In one embodiment, the system runs about 7 torr positive pressure.

The water supply line 106-a may be configured such that water may be combined with the C-O-H compound to create a wet form of the compound before it is introduced into chamber 102-a. A conveyor mechanism (not shown) may be included that may be utilized to transfer the wet compound into the chamber 102-a.

According to other disclosures, the reaction product may include liquid fuel. This product may then be available for collection. The hydrogen and/or carbon dioxide gases may be extracted as end products.

The hydrogen gas can then be further used to generate electrical power or heat by different systems, or can be packaged for sales and distribution as a purified gas. Optionally, the gas supply line 114-a for providing inert gas is not present. In such a case, trace amounts of entrained air in the wetted feedstock being inserted into the chamber 102-a may react with the CO-H compound 104-a to produce water and carbon dioxide.

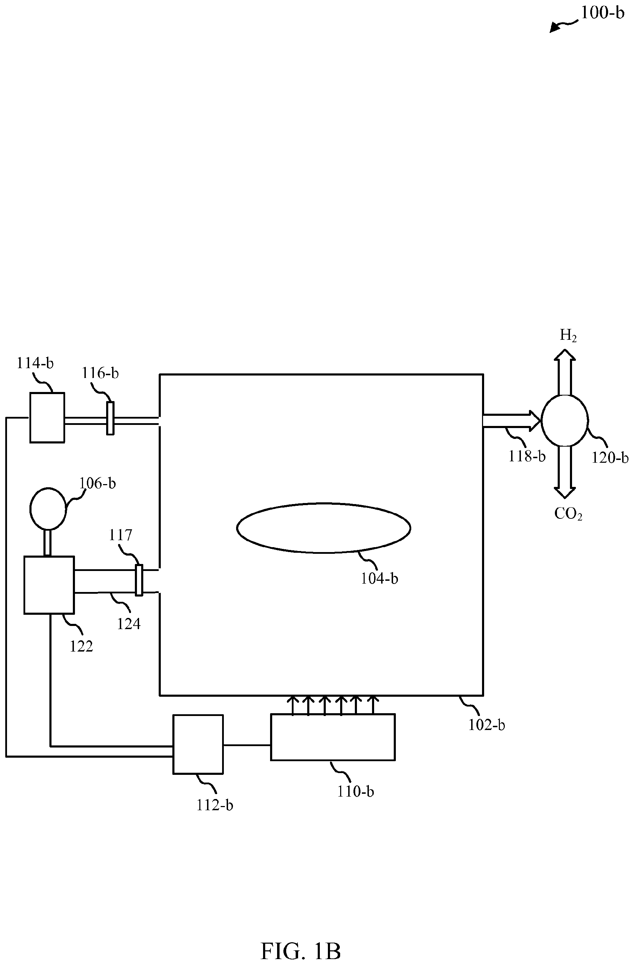

A general overview of another simplified system 100-b for conversion of a C-O-H compound into hydrogen and/or liquid fuel is provided with **FIG. 1B**. The system 100-b may include a chamber 102-b, a heating system 110-b in a thermal communication with the chamber 102-b, an optional gas supply line 114-b for providing inert gas into the chamber 102-b, a water supply line 106-b for water to be added to and/or mixed with a C-O-H compound within the feed stock hopper or chamber 122-b, an exhaust line 118-b to allow the product gases (such as $H_2$ and $CO_2$, depending on the specific compound(s) used) to exit the chamber 102-b to flow into an optional gas separator 120-b, and/or a controller 112-b. The wet C-O-H compound 104-b may disposed within the chamber 102-b. The chamber 122-b may be configured as a mixing chamber and/or a combining chamber, where water may be mixed and/or combined with the compound to form the wet C-O-H compound. Examples of wet C-O-H compounds 104-b that may be found suitable for methods include, but are not limited to, sources of cellulose, hemicellulose, and/or sources of lignin that may be made wet. The C-O-H compound may include waste stream sources that include C-O-H compounds. As described further below, some processes may use an inert gas, and the controller 112-b controls when to continuously purge chamber 102-b with inert gas by using a valve 116-b. The controller 112-b may also control the heating system 110-b to provide the elevated temperatures that the chamber needs to cause the C-O-H compound 104-b to be dissociated in the environment within the chamber 102-b. The controller 112-b may also control the rate of speed of the insertion of wetted feedstock into the chamber 102-b. A valve 117 may be utilized in some cases. The controller 112 may further control the temperature of the heating system 110-b to convert the water in the wetted feedstock into water vapor and to heat the C-O-H compound 104-b to cause the chemical reaction of the C-O-H compound 104-b with water. The gas separator 120-b may be used to separate the products of the reaction (e.g., $H_2$ and $CO_2$ gases and perhaps other reaction products) after the gases ($H_2$, $CO_2$) exit the chamber 102-b.

During the biomass processing, the system 100-b may run at atmospheric pressure to very slightly positive pressure, up to about 10 torr positive pressure. This may serve to minimize leaks in the system and significantly reduces the risk of an escalating pressure event. In one embodiment, the system runs about 7 torr positive pressure.

The water supply line 106-b may be configured such that water may be combined with the C-O-H compound to create a wet form of the compound before it is introduced into chamber 102-b, such as in feedstock hopper or chamber 122. A conveyor mechanism 124 may be utilized to transfer the wet compound into the chamber 102-b. Optionally, gravity may be utilized to help transfer the wetted feedstock into chamber 102-b. In some cases, the wetted feedstock may be manually transferred into the chamber 102-b.

The hydrogen gas can then be further used to generate electrical power or heat by different systems, or can be packaged for sales and distribution as a purified gas. Optionally, the gas supply line 114-b for providing inert gas is not present. In such a case, trace amounts of entrained air in the wetted feedstock being inserted into the chamber 102-b may react with the CO-H compound 1044-b to produce water and carbon dioxide.

Technique for hydrogen burning to generate power and/or heat are known in the art, for example U.S. Pat. Appl. No.: US/7,144,826 B2, entitled "Method and Apparatus for the Production of Process Gas That includes Water Vapor and Hydrogen Formed by Burning Oxygen in a Hydrogen-Rich Environment" by George Roters, Helmut Sommer, Genrih Erlikh, and Yehuda Pashut.

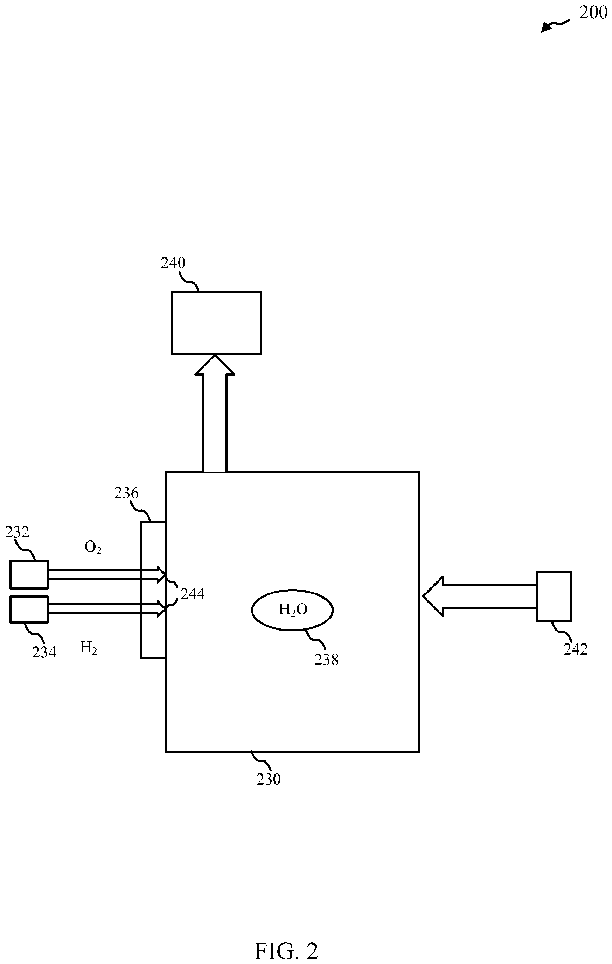

For illustration purposes, a simplified exemplary system 200 for hydrogen burn is provided in **FIG. 2.** The system 200 comprises a combustion chamber 230, a burner 236 for igniting hydrogen burning in oxygen to form water vapor 238 and generate heat, a $H_2$ gas supply line for providing $H_2$ into the combustion chamber 230, a gas supply line for providing $O_2$ or air into the combustion chamber 230, an exhaust line 240 for water vapor steam 238 to exit the combustion chamber 230, and an inert gas supply line 242 for providing inert gas to flush the combustion chamber prior to introducing $H_2$ gas to the combustion chamber 230. The ratio of hydrogen gas 234 and oxygen gas 232 may be provided such that hydrogen may be thoroughly burned in oxygen. The water vapor 238 may be converted into electrical power in the converter 240 by any of several techniques known in the art. In general, instead of oxygen, an oxygen-containing gas, such as, among others, NO or $O_3$, can be used, merely by way of example. As noted, optionally, the gas supply line 242 for providing inert gas is not present. In such a case, air inside the chamber 230 may react with the C-O-H compound to produce water and carbon dioxide until the air is depleted.

After the combustion chamber is filled with hydrogen 234, the heating system 236 may be activated and now oxygen 232 may be introduced into the chamber. In the combustion chamber 230, the oxygen 234 may be introduced, for example, with a time delay of five seconds relative to hydrogen 234. The heating system 236 may heat the region near the outlet 244 to about 700°C to ignite the combustion, merely by way of example. The ratio of the oxygen 232 to the hydrogen 234 may be provided into the combustion chamber so that the hydrogen is completely burned.

Another method of conversion of hydrogen into electrical power is using a fuel cell. A fuel cell is an electrochemical energy conversion device. It transforms chemical power into electrical power. A fuel cell can convert hydrogen and oxygen into water and produce electricity and heat. A fuel cell can also use other fuel sources than hydrogen gas, such as liquid fuel like methanol, natural gas, gasoline, and the like. A fuel cell power generation equipment comprises an anode, an electrolyte membrane, a cathode and a diffusion layer, wherein fuel is oxidized at an anode and oxygen is reduced at a cathode, such as described in U.S. Pat. Appl. No: US/7,192,666 B2, entitled "Apparatus and Method for Heating Fuel Cells" by John C. Calhoon.

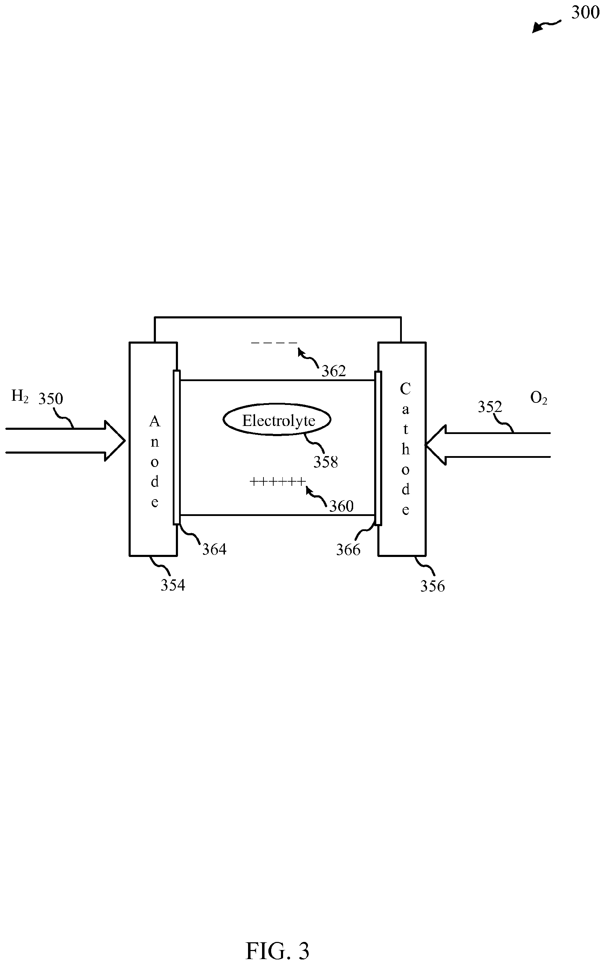

**FIG. 3** shows a simplified fuel cell system 300 for using $H_2$ gas as fuel. The system 300 comprises an anode 354, and a cathode 356, an electrolyte 358, a hydrogen gas 350 supply line, and an oxygen gas 352 supply line. Hydrogen 350 from the gas supply line may be fed to the anode 354 of the fuel cell, while oxygen 352 from the gas supply line may be fed to the cathode 356 of the fuel cell. The hydrogen 300 atoms, reacting with a catalyst 364 in the anode 354, are split into protons 360 and electrons 362. Meanwhile, an oxygen molecule 352, reacting with a catalyst 366 in the cathode 356, is split into two separate oxygen atoms bearing negative charges.

The electrolyte 358 is positioned between the anode 354 and the cathode 356. The electrolyte 358 functions as a conductor for carrying protons 360 between the anode 354 and the cathode 356. The protons 360 are permitted to pass through the electrolyte while the electrons 362 are not. The protons 360 pass through the electrolyte 358 towards the oxygen 352 in the cathode 356. The result is a build up of negative charge in the anode 354 due to the electrons 362 that are left behind. The electrical potential generated by the buildup of electrons 362 is used to supply electrical power. Meanwhile, the protons diffuse through the membrane (electrolyte) to the cathode, where a hydrogen atom is recombined at the cathode and reacted with oxygen to form water at the cathode.

There are many types of fuel cells for converting hydrogen and oxygen into water and generating electricity, for instance, among others, phosphoric acid fuel cell (PAFC), Proton Exchange Membrane (PEM), Molten Carnoate Fuel Cell (MCFC), Solid Oxide Fuel Cell (SOFC), and Alkaline Fuel Cell (AFC). The efficiencies vary from various fuel cells, ranging from 30% to 85%, merely by way of example.

The chemical reactions also vary from fuel cells. For example, the chemical equations for describing the PEM reactions in the anode, cathode, and the fuel cell may be provided as follows:

Anode: $H_2 (g) \rightarrow 2H^+(aq) + 2e^-$

Cathode: $1/2\ O_2 (g) + 2H^+(aq) + 2e^- \rightarrow H_2O\ (1)$

Fuel Cell: $H_2 (g) + 1/2\ O_2 (g) \rightarrow H_2O\ (1)$.

Another example of the chemical reactions for describing the PAFC reactions is provided below:

Anode: $H_2 (g) \rightarrow 2H^+(aq) + 2e^-$

Cathode: $1/2\ O_2\ (g) + 2H^+(aq) + 2e^- \rightarrow H_2O\ (1)$

Fuel Cell: $H_2\ (g) + 1/2\ O_2\ (g) + CO_2 \rightarrow H_2O\ (1) + CO_2.$

Note that PAFCs can tolerate a low concentration of $CO_2$ of about 1.5%, which allows a broad selection of acceptable hydrogen fuels.

Processes for Conversion of Hydrogen into Electrical Power

Processes for extracting hydrogen and converting that hydrogen into electrical power may address many of the issues identified as problems in the gasification space. A simplified system design may allow scalability over a very wide range from home unit size to commercial power production. The process may focus on thermal issues causing heat losses that tend to make gasification technologies inefficient. Although the process may produce excess heat, heat losses to the environment and through the exiting gases may be accounted for. Because of the exothermic nature, the leverage of thermal power out from the input power may be over 20.

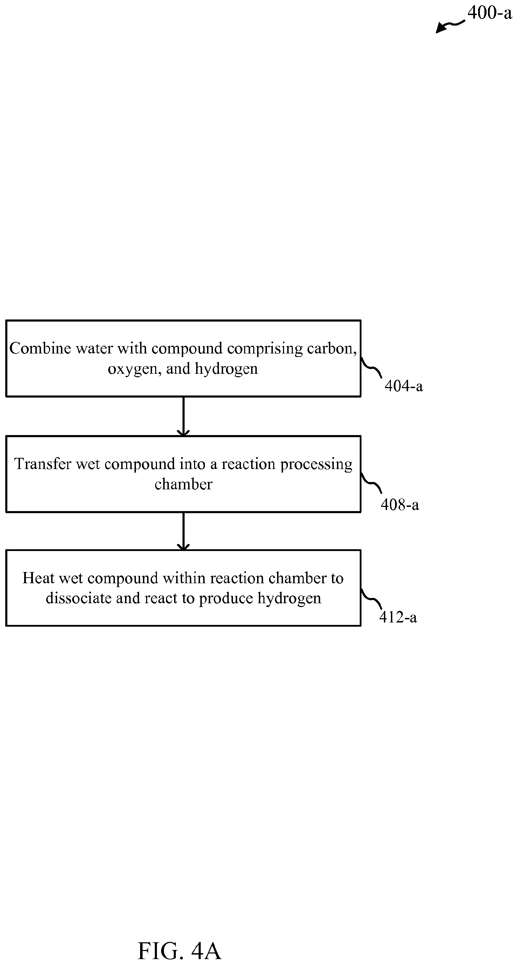

**FIG. 4A** provides an overview of a method 400-a that may be used for conversion of the C-O-H compound into hydrogen for power generation. In FIG. 4A and in the other flow diagrams, the specific selection of steps shown and the order in which they are shown are intended merely to be illustrative. It is possible for certain steps to be performed in alternative orders, for certain steps to be omitted, and for certain additional steps to be added according to different embodiments of the invention. Some but not all of these variants are noted in the description that follows. Method 400-a may be implemented utilizing aspects of system 100-a of FIG. 1A, system 100-b of FIG. 1B, system 200 of FIG. 2, and/or system 300 of FIG. 3.

At block 404-a, water may be combined with the C-O-H compound, examples of which may include, but are not limited to, cellulose, hemicellulose and/or lignin. The C-O-H compound may include waste streams that include C-O-H compounds. The wet compound may be transferred into a reaction processing chamber at block 408-a. These two steps provide one example of steps whose order may be changed.

At block 412-a, the wet compound is heated within the reaction chamber. Such heating may be accomplished using a variety of different techniques known to those of skill in the art, some of which have been described above for specific structural embodiments. In some instances, the compound may be heated to a temperature between 700°C and 1100°C although other temperatures are known by the inventors also to be effective. Heating the wet compound may cause dissociation and reaction of the dissociated elements, with typical reaction products including molecular hydrogen $H_2$ and carbon dioxide $CO_2$. The reaction(s) involved may include non-oxidation reaction, including hydrous pyrolosis.

Method 400-a may run at atmospheric pressure to very slightly positive pressure, up to about 10 torr positive pressure. This may serve to minimize leaks in the system and significantly reduces the risk of an escalating pressure event. In one embodiment, the system runs about 7 torr positive pressure.

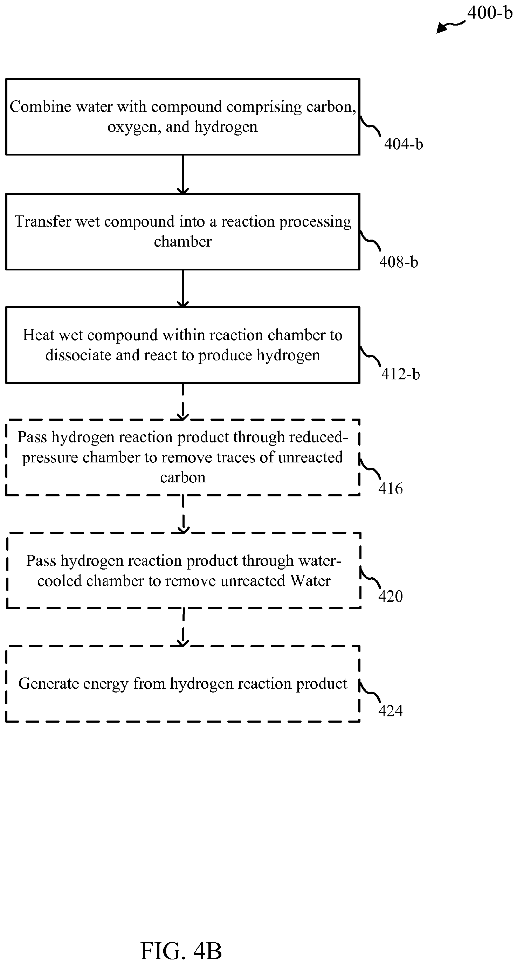

**FIG. 4B** provides an overview of a method 400-b in accordance with various embodiments that may be used for conversion of the C-O-H compound into hydrogen for power generation. In FIG. 4B and in the other flow diagrams, the specific selection of steps shown and the order in which they are shown are intended merely to be illustrative. It is possible for certain steps to be performed in alternative orders, for certain steps to be omitted, and for certain additional steps to be added according to different embodiments of the invention. Some but not all of these variants are noted in the description that follows. Method 400-b may be implemented utilizing aspects of system 100-a of FIG. 1A, system 100-b of FIG. 1B, system 200 of FIG. 2, and/or system 300 of FIG. 3. Method 400-b may be an example of FIG. 400-A.

At block 404-b, water may be combined with the C-O-H compound, examples of which may include, but are not limited to, cellulose, hemicellulose and/or lignin. The C-O-H compound may include waste streams that include C-O-H compounds. The wet compound may be transferred into a reaction processing chamber at block 408-b. These two steps provide one example of steps whose order may be changed. For example, the compound may be disposed in the reaction processing chamber in a dry state, with the "transfer" effected by combining it with water while disposed there. In still other instances, water may be applied to the compound as it is moved into the reaction processing chamber, such as by using a spray system, as part of the transfer.

At block 412-b, the wet compound is heated within the reaction chamber. Such heating may be accomplished using a variety of different techniques known to those of skill in the art, some of which have been described above for specific structural embodiments. In claimed methods, the compound is heated to a temperature between 700°C and 1100°C, although other temperatures are known by the inventors also to be effective. Heating the wet compound may cause dissociation and reaction of the dissociated elements, with typical reaction products including molecular hydrogen $H_2$ and carbon dioxide $CO_2$. The reaction(s) involved in the claimed methods include hydrous pyrolosis. Molecular hydrogen produced within the reaction chamber may be processed at blocks 416 - 424, although not all of these steps need be included in many embodiments.

In particular, it is not expected that the production of hydrogen will be 100% and there may be traces of unreacted elements remaining in the reaction products. For example, passing the hydrogen reaction product through a reduced-pressure chamber at block 416 may be useful in removing traces of unreacted carbon and passing the hydrogen reaction product through a water-cooled chamber at block 420 may be useful in removing unreacted water and tars.

Once the hydrogen has been extracted from the process, it may be processed at block 424 to generate energy, such as by using a burning process, a reciprocating engine, or a fuel-cell process as described above. The hydrogen may also be utilized for other purposes in some embodiments.

Method 400-b may run at atmospheric pressure to very slightly positive pressure, up to about 10 torr positive pressure. This may serve to minimize leaks in the system and significantly reduces the risk of an escalating pressure event. Optionally, the system runs about 7 torr positive pressure.

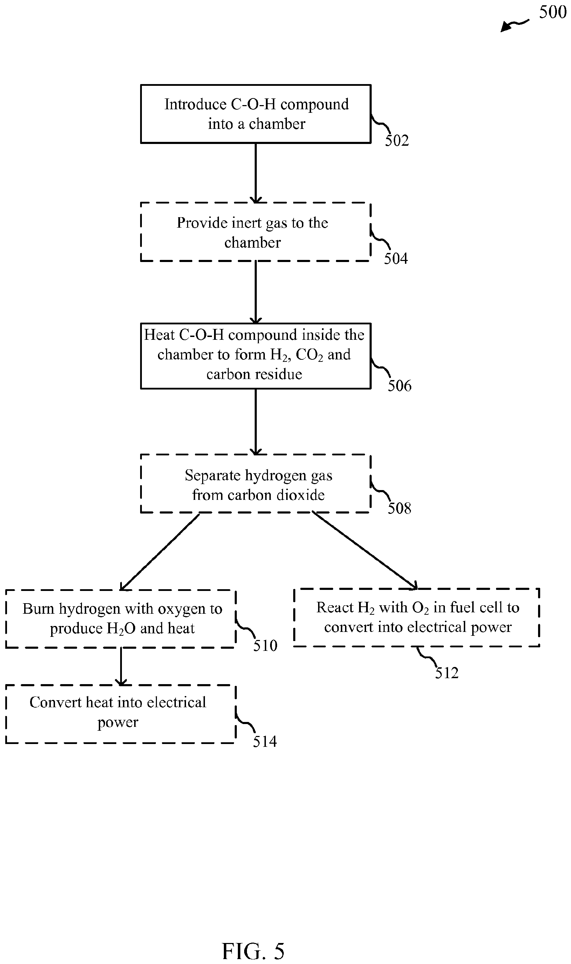

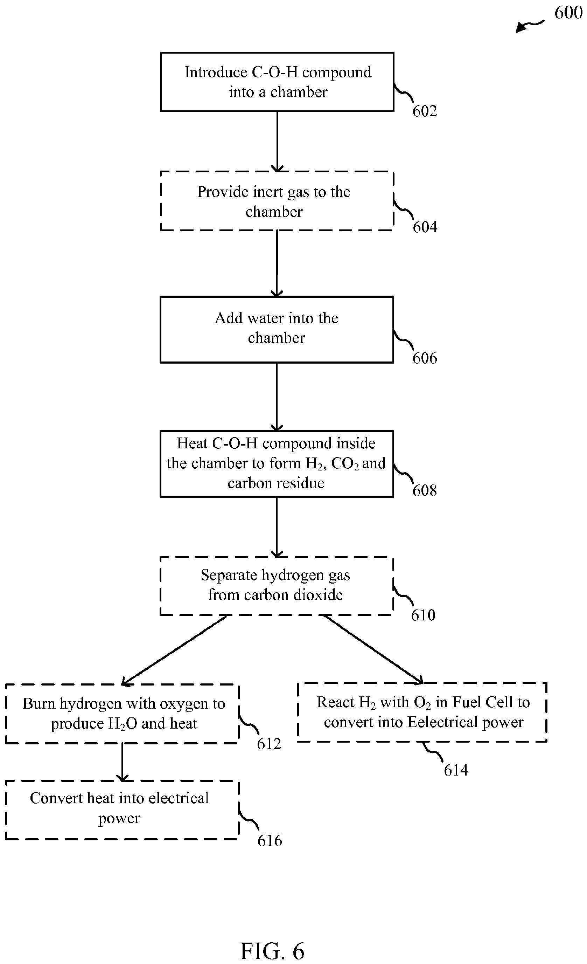

FIG. 5 and FIG. 6 provide more specific illustrations of methods of the invention for particular embodiments. For example, **FIG. 5** is a flow diagram that summarizes a first method 500 of conversion of a source of C-O-H compound such as cellulose, hemicellulose, and/or lignin into hydrogen from a reaction, such as reaction 1a, and then steps for conversion of hydrogen into electrical power. The compound may include waste streams that include at least one C-O-H compound. Water may be combined with the C-O-H compound to produce a wet form of the C-O-H compound. The wet form of the C-O-H compound may be transferred into a reaction processing chamber. The wet form of the C-O-H compound may be heated within the reaction chamber such that elements of the C-O-H compound dissociate and react, with one reaction product comprising at least hydrogen gas and/or liquid fuel. Claimed embodiments utilize hydrous pyrolysis reactions. The hydrogen gas and/or liquid fuel may be utilized to generate electrical power, heat, or power different types of engines.

Method 500 may be implemented utilizing aspects of system 100-a of FIG. 1A, system 100-b of FIG. 1B, system 200 of FIG. 2, and/or system 300 of FIG. 3. Some methods of method 500 may utilize different reactions. The process may start at block 502 by introducing the source of C-O-H compound into a chamber. The chamber may then be flushed with inert gas to displace air in the chamber at block 504. The inert gas may comprise argon, nitrogen, helium, and the like. In a specific embodiment of the invention, no inert gas is introduced into the chamber so that the chamber is filled with air. Optionally, the wetted cellulosic feedstock is continuously moved through the heating chamber, and no inert gas is used, and the geometry of the chamber minimizes the presence of air in the chamber. The air may react with the C-O-H compound until the air is depleted inside the chamber. The chamber containing the source of CO-H compound may be heated to cause dissociation of the C-O-H compound at block 506. The dissociation may result in forming hydrogen gas, carbon dioxide, carbon monoxide, other hydrocarbons, and carbon residue. The hydrogen gas may be separated from the carbon dioxide gas at block 608 by techniques known in the art. The diagram shows two possible ways of conversion of hydrogen into electrical power, though other ways may be utilized. One way of conversion of hydrogen into electricity is to react hydrogen with oxygen in a fuel cell at block 512. Another way of conversion of hydrogen into electrical power is to burn hydrogen gas in oxygen in a combustion chamber at block 510, so that water vapor is formed along with heat release. The water vapor may then be fed into an energy converter such as an expansion turbine for producing electricity from thermal energy at block 514 by techniques known in the art.

**FIG. 6** is a flow diagram that summarizes a second method 500 of conversion of a source of C-O-H compound into hydrogen from a reaction, such as reaction 2a, and steps for conversion of hydrogen into electrical power. Method 600 may be implemented utilizing aspects of system 100-a of FIG. 1A, system 100-b of FIG. 1B, system 200 of FIG. 2, and/or system 300 of FIG. 3. Method 600 may utilize other reactions in some embodiments. The process starts at block 602 by introducing the source of C-O-H compound into a chamber. The chamber may then be flushed with inert gas to displace air in the chamber at block 604. The inert gas may comprise argon, nitrogen, helium, and the like. Optionally, no inert gas is introduced into the chamber so that the chamber is filled with air. The air reacts with cellulose, hemicellulose, and/or lignin until the air may be depleted inside the chamber.

Water may then be added into the chamber at block 606, as water may be needed to react with the C-O-H compound to form hydrogen and carbon dioxide. The water in the form of liquid may be heated to be changed to water vapor, and the chamber containing the source of C-O-H compound is heated to a temperature at which the C-O-H compound may react with the water vapor at block 608. Optionally, the wetted cellulosic feedstock is continuously moved through the heating chamber, and no inert gas is used, and the geometry of the chamber minimizes the presence of air in the chamber. The reaction of C-O-H compound and water results in forming a hydrogen gas and a carbon dioxide gas. The hydrogen gas needs to be separated from the carbon dioxide gas at block 610 by techniques known in the art.

The diagram shows two possible ways of conversion of hydrogen into electrical power, though other ways may be also utilized. One way of conversion of hydrogen into electricity is to react hydrogen with oxygen in a fuel cell at bock 614. Another way of conversion of hydrogen into electrical power is to burn hydrogen gas in oxygen in a combustion chamber at block 612, so that water vapor is formed along with heat release. The water vapor may then be fed into an energy converter for producing electricity from thermal energy at block 616by techniques known in the art.

The cellulose reactions 2a and 2b may have several unique features for automotive applications. First of all, by utilizing the waste heat from the engine to heat up the reaction chamber for hydrogen production, it may potentially recapture the energy of 487 kJ/mol that is the heat used to form water vapor at 400°C and to heat cellulose as discussed above. This may improve the energy output by 17% that is equal to (487 kJ/mol)/(2902 kJ/mol).

Furthermore, the water vapor generated from hydrogen burn in reaction 2b may be re-circulated into the hydrogen generation chamber so that the water usage would only be the initial one to start the cellulose process. As shown in reactions 2a and 2b, 12 moles of water are released from each mole of cellulose converted. If the water from reaction 2b is reused without any loss, 5 net moles of water are created from cellulose in reactions 2a and 2b, merely by way of example. By proper use and capture of the generated water from reaction 2b, no net water may be needed in sustaining the cellulose reaction process. This may eliminate an initial concern that the weight of 126 g (7 moles) of water for 162 g (1 mole) of cellulose in Reaction 2a would be an additional burden to the automobiles.

Additionally, the system for conversion of cellulose into hydrogen for power generation may reduce the production of carbon dioxide generation, when compared to the use of gasoline. This may help with easing the concern of global warming issue. For 1 mile per kW-hr as discussed earlier on, the carbon dioxide release in reaction 2a for one mole of cellulose may be estimated by:

$$(6 \text{ x } 44 \text{ g } CO_2)/(12 \text{ x } 2 \text{ g } H_2) = 11 \text{g } CO_2/gH_2$$

$$(11 \text{ kg } CO_2/\text{kg } H_2)/(33.6 \text{ kW-hr/kgH}_2)/(1\text{mile/kW-hr}) = 0.33 \text{ kg } CO_2/\text{mile}.$$

In contrast, gasoline can release about 9 kg carbon dioxide per gallon. Merely by way of example, if a car gets 28 miles/gallon gasoline, the carbon dioxide release from 1 mole of cellulose may be equal to: 28 miles/gallon $\times$ 0.33 kg $CO_2$/mile = 9.24 kg $CO_2$/gallon. This is approximately equivalent to that released from gasoline. However, the cellulose process is renewable. If it is possible to achieve 5 miles/kW-hr $H_2$ that is 5 times of the conservative estimation of 1 mile/kW-hr $H_2$, then the hydrogen burn would be the equivalent to $5 \times 28 = 140$ miles/gallon gasoline equivalent release of carbon dioxide. Therefore, relatively less carbon dioxide may be produced from hydrogen burn.

The process for conversion of cellulosic biomass into hydrogen may enhance the recycling of cellulosic biomass products and turn its waste into power generation. For instance, the waste of cellulosic biomass includes forest floors that currently are not economical to recover, but present a serious fire hazard. If it becomes economical to recycle the cellulosic biomass waste through the use of the present invention, the hazard problem may be reduced. Other cellulosic biomass waste that currently ends up in the land fills may also be utilized through recycling.

Processes for Making Liquid Fuel from Cellulose or Other C-O-H Compounds (not according to the invention)

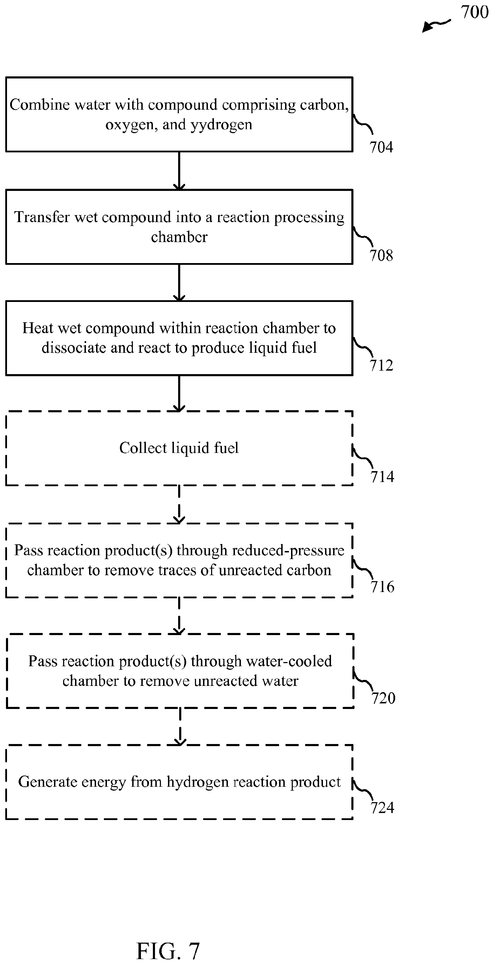

**FIG. 7** provides an overview of a method 700 that may be used for making liquid fuel from C-O-H compounds, such as lignin, cellulose or hemicellulose, or combinations thereof. Waste streams or products that include C-O-H compounds may be utilized. Method 700 may be implemented utilizing aspects of system 100-a of FIG. 1, system 100-b of FIG. 1B, system 200 of FIG. 2, and/or system 300 of FIG. 3. In FIG. 7, the specific selection of steps shown and the order in which they are shown is intended merely to be illustrative. It is possible for certain steps to be performed in alternative orders, for certain steps to be omitted, and for certain additional steps to be added. Some but not all of these variants are noted in the description that follows.

At block 704 of FIG. 7, water may be combined with the C-O-H compound such as celluslose, hemicelluloses, lignin, or combinations thereof. The wet compound may be transferred into a reaction processing chamber at block 708. These two steps provide one example of steps whose order may be changed. For example, the compound may be disposed in the reaction processing chamber in a dry state, with the "transfer" effected by combining it with water while disposed there. In still other instances, water may be applied to the compound as it is moved into the reaction processing chamber, such as by using a spray system, as part of the transfer.

At block 712, the wet compound may be heated within the reaction chamber. Such heating may be accomplished using a variety of different techniques known to those of skill in the art. The compound is heated to a temperature between 700 °C and 1100 °C although other temperatures are known by the inventors also to be effective. Heating the wet compound causes dissociation and reaction of the dissociated elements, with typical reaction products including molecular hydrogen $H_2$ and carbon dioxide $CO_2$ in addition to the liquid fuel. The specific reaction products depend on the reaction mechanisms used, examples of which were provided above. The liquid fuel may be collected at block 714.

If molecular hydrogen that is produced within the reaction chamber is further processed, those steps indicated at blocks 716 - 724 may be performed.

In particular, it is not expected that the production of liquid fuel will be 100% and there may be traces of unreacted elements remaining in the reaction products. For example, passing the liquid-fuel reaction product through a reduced-pressure chamber at block 716 may be useful in removing traces of unreacted carbon and passing the liquid-fuel reaction product through a water-cooled chamber at block 720 may be useful in removing unreacted water.

Once the hydrogen has been extracted as an end product from the process, it may be processed at block 724 to generate energy, such as by using a burning process or a fuel-cell process as described above. The carbon dioxide gas may also be extracted as an end product.

Other Potential Applications

The process for making liquid fuel from cellulose or other C-O-H compounds, such as hemicellulose or lignin, or combinations thereof, may enhance the recycling of cellulosic biomass products and turn cellulosic waste into liquid fuel and to be used for energy production. For instance, the waste of cellulosic biomass includes forest floors that currently may not be economical to recover, but present a serious fire hazard. Recycling this cellulosic waste through the use of different embodiments may reduce this hazard problem. Other cellulosic waste that currently ends up in the land fills may also be utilized through recycling.

The above description should not be taken as limiting the scope of the invention, which is defined by the appended claims.

**Claims**

1. A method for extracting at least hydrogen from a compound comprising carbon, oxygen, and hydrogen, the method comprising:

determining an amount of water to combine with the compound to produce a wet form of the compound and to react through a hydrous pyrolysis reaction with the compound, wherein the determined amount of water equals at least:

$$M_T \{(1-W)( 0.7778C + [18(16+n)/(150+31n)]L + 0.79G + 1.37X]) - W\},$$

wherein:

$M_T$ equals a mass of the compound;
W equals a weight percent water of the compound;
C equals a cellulose ($C_6H_{10}O_5$) percentage of the compound;
L equals a lignin ($C_{9+n}H_{10+3n}O_{2+n}$) percentage of the compound and $0.9 < n < 1.4$;
X equals a xylan ($C_{17}H_{36}O_8$) percentage of the compound; and
G equals a glucomannan ($C_{35}H_{49}O_{35}$) percentage of the compound; or

$$M_T \{(1-W)[mass(H_2O) \times (2\%C/mass(C) - \%O/mass(O))] - W\},$$

wherein:

$M_T$ equals a mass of the compound;
W equals a weight percent water of the compound;
%C equals a carbon weight percentage of the compound; and
%O equals an oxygen weight percentage of the compound;

combining the determined amount of water with the compound to produce the wet form of the compound, wherein the compound comprises at least cellulose, lignin, hemicellulose, or a waste stream, wherein the waste stream includes at least one C-O-H compound selected from paper waste, sawdust of wood, cardboard, hay, straw, switchgrass, municipal solid waste, sanitized waste and/or demolition and construction wood waste; transferring the wet form of the compound into a reaction processing chamber; heating the wet form of the compound within the reaction processing chamber to a temperature between 700 °C and 1100 °C such that elements comprised by the wet form of the compound dissociate and react through the hydrous pyrolysis reaction, wherein one reaction product comprises at least hydrogen gas; and extracting at least hydrogen gas.

2. The method recited in claim 1, wherein heating the wet form of the compound within the reaction processing chamber occurs under atmospheric pressure conditions.

3. The method recited in claim 1, further comprising:
providing a flow of an inert gas to the reaction processing chamber.

4. The method recited in claim 1, wherein the extracted hydrogen gas is processed at least to generate at least electrical power or heat, to produce liquid fuels, by burning the hydrogen gas, or by feeding the hydrogen gas into a fuel cell.

5. The method recited in claim 1, wherein the water comprises liquid water.

6. The method recited in claim 1, further comprising passing reaction-product gases through a reduced pressure chamber to remove traces of unreacted carbon.

7. The method recited in claims 1 or 6, further comprising passing reaction-product gases through a water-cooled chamber to remove unreacted water.

**Patentansprüche**

1. Verfahren zur Gewinnung von zumindest Wasserstoff aus einem Stoff, der Kohlenstoff, Sauerstoff und Wasserstoff umfasst, wobei das Verfahren Folgendes umfasst:

Bestimmen einer Menge an Wasser zur Vereinigung mit dem Stoff, um eine nasse Form des Stoffs zu produzieren und durch eine wässrige Pyrolysereaktion mit dem Stoff zur Reaktion zu bringen, wobei die bestimmte Menge an Wasser mindestens Folgendem entspricht:

$$M_T\{(1 - W)(0,7778C + [18(16 + n)/(150 + 31n)]L + 0,79G + 1,37X]) - W\},$$

wobei:

$M_T$ einer Masse des Stoffs entspricht;
W Gewichtsprozent Wasser des Stoffs entspricht;
C einem Cellulose ($C_6H_{10}O_5$)-Prozentsatz des Stoffs entspricht;
L einem Lignin ($C_{9+n}H_{10+3n}O_{2+n}$)-Prozentsatz des Stoffs entspricht und $0,9 < n < 1,4$ ist;
X einem Xylan ($C_{17}H_{36}O_8$)-Prozentsatz des Stoffs entspricht; und
G einem Glucomannan ($C_{35}H_{49}O_{35}$)-Prozentsatz des Stoffs entspricht; oder

$$M_T\{(1 - W)[Masse\ (H_2O)\ x\ (2\ \%\text{-C}/Masse\ (C) - \%\text{-O}/Masse\ (O))] - W\},$$

wobei

$M_T$ einer Masse des Stoffs entspricht;
W Gewichtsprozent Wasser des Stoffs entspricht;
%-C einem Kohlenstoff-Gewichtprozentsatz des Stoffs entspricht; und
%-O einem Sauerstoff-Gewichtprozentsatz des Stoffs entspricht;

Vereinigen der bestimmten Menge an Wasser mit dem Stoff, um die nasse Form des Stoffs zu produzieren, wobei der Stoff mindestens Cellulose, Lignin, Hemicellulose oder einen Abfallstrom umfasst, wobei der Abfallstrom mindestens einen C-O-H-Stoff einschließt, der aus Folgenden ausgewählt ist: Papierabfall, Sägemehl von Holz, Karton, Heu, Stroh, Rutenhirse, kommunaler Feststoffabfall, hygienisierter Abfall und/oder Abbruch- und Bauholzabfall;
Überführen der nassen Form des Stoffs in eine Reaktionsprozesskammer;
Erhitzen der nassen Form des Stoffs innerhalb der Reaktionsprozesskammer auf eine Temperatur zwischen 700 °C und 1100 °C, sodass sich Elemente, die in der nassen Form des Stoffs enthalten sind, trennen und durch die wässrige Pyrolysereaktion reagieren, wobei ein Reaktionsprodukt mindestens Wasserstoffgas umfasst; und
Gewinnen von mindestens Wasserstoffgas.

2. Verfahren nach Anspruch 1, wobei das Erhitzen der nassen Form des Stoffs innerhalb der Reaktionsprozesskammer unter atmosphärischen Druckbedingungen erfolgt.

3. Verfahren nach Anspruch 1, das weiter Folgendes umfasst:
Bereitstellen eines Flusses eines Inertgases für die Reaktionsprozesskammer.

4. Verfahren nach Anspruch 1, wobei das gewonnene Wasserstoffgas zumindest verarbeitet wird, um mindestens elektrischen Strom oder Wärme zur Produktion von flüssigen Brennstoffen durch Verbrennen des Wasserstoffgases oder durch Zuführen des Wasserstoffgases in eine Brennstoffzelle zu erzeugen.

5. Verfahren nach Anspruch 1, wobei das Wasser flüssiges Wasser umfasst.

6. Verfahren nach Anspruch 1, das weiter das Durchleiten von Reaktionsproduktgasen durch eine Kammer mit reduziertem Druck umfasst, um Spuren von nicht reagiertem Kohlenstoff zu entfernen.

7. Verfahren nach Anspruch 1 oder 6, das weiter das Durchleiten von Reaktionsproduktgasen durch eine wassergekühlte Kammer umfasst, um nicht reagiertes Wasser zu entfernen.

**Revendications**

1. Méthode d'extraction d'au moins de l'hydrogène à partir d'un composé comprenant du carbone, de l'oxygène et de l'hydrogène, la méthode comprenant :

la détermination d'une quantité d'eau à combiner avec le composé afin de produire une forme humide du composé et à réagir via une réaction de pyrolyse aqueuse avec le composé, où la quantité déterminée d'eau est égale à au moins :

$$M_T\{(1\text{-}W)(0,7778C + [18(16+n)/(150+31n)]L + 0,79G + 1,37X]) - W\},$$

où

$M_T$ est égal à une masse du composé ;
W est égal à un pourcentage pondéral d'eau du composé ;
C est égal à un pourcentage de cellulose ($C_6H_{10}O_5$) du composé ;
L est égal à un pourcentage de lignine ($C_{9+n}H_{10+3n}O_{2+n}$) du composé et $0,9 < n < 1,4$ ;
X est égal à un pourcentage de xylane ($C_{17}H_{36}O_8$) du composé ; et
G est égal à un pourcentage de glucomannane ($C_{35}H_{49}O_{35}$) du composé ; ou

$$M_T\{(1\text{-}W)[\text{masse }(H_2O) \times (2\%C/\text{masse }(C) - \%O/\text{masse}(O))] - W\},$$

où

$M_T$ est égal à une masse du composé ;
W est égal à un pourcentage pondéral d'eau du composé ;
%C est égal à un pourcentage pondéral de carbone du composé ; et
%0 est égal à un pourcentage pondéral d'oxygène du composé ;

la combinaison de la quantité déterminée d'eau avec le composé afin de produire la forme humide du composé, où le composé comprend au moins de la cellulose, de la lignine, de l'hémicellulose, ou un courant résiduaire, où le courant résiduaire comporte au moins un composé de C-O-H choisi parmi les déchets de papier, la sciure de bois, le carton, le foin, la paille, le panic raide, les déchets solides municipaux, les déchets assainis, les déchets de bois de démolition et de construction ;

le transfert de la forme humide du composé dans une chambre de traitement réactionnel ;

le chauffage de la forme humide du composé au sein de la chambre de traitement réactionnel à une température comprise entre 700°C et 1100°C, de façon à ce que les éléments compris par la forme humide du composé se dissocient et réagissent via la réaction de pyrolyse aqueuse, où l'un des produits de réaction comprend au moins de l'hydrogène gazeux ; et

l'extraction d'au moins l'hydrogène gazeux.

2. Méthode selon la revendication 1, dans laquelle le chauffage de la forme humide du composé au sein de la chambre de traitement réactionnel a lieu dans des conditions de pression atmosphérique.

3. Méthode selon la revendication 1, comprenant en outre :

la mise à disposition d'un flux de gaz inerte dans la chambre de traitement réactionnel.

4. Méthode selon la revendication 1, dans laquelle l'hydrogène gazeux extrait est traité au moins afin de générer au moins de l'énergie électrique ou de la chaleur, afin de produire des combustibles liquides, en brûlant l'hydrogène gazeux, ou en alimentant l'hydrogène gazeux dans une pile à combustible.

5. Méthode selon la revendication 1, dans laquelle l'eau comprend de l'eau liquide.

6. Méthode selon la revendication 1, comprenant en outre le passage de gaz produits par la réaction dans une chambre à pression réduite afin d'éliminer les traces de carbone n'ayant pas réagi.

7. Méthode selon la revendication 1 ou 6, comprenant en outre le passage de gaz produits par la réaction dans une chambre refroidie à l'eau afin d'éliminer l'eau n'ayant pas réagi.

FIG. 1A

100-b

114-b  116-b

106-b

117

124

122

112-b

110-b

102-b

H₂

118-b  120-b

CO₂

104-b

FIG. 1B

FIG. 2

300

H₂ 350

A
n
o
d
e

Electrolyte

358

- - - -
362

+ + + + + +
360

C
a
t
h
o
d
e

352 O₂

364

366

354

356

FIG. 3

400-a

Combine water with compound comprising carbon, oxygen, and hydrogen

404-a

Transfer wet compound into a reaction processing chamber

408-a

Heat wet compound within reaction chamber to dissociate and react to produce hydrogen

412-a

FIG. 4A

400-b

```
┌─────────────────────────────────────────┐
│  Combine water with compound comprising  │
│  carbon, oxygen, and hydrogen            │╲
└─────────────────────────────────────────┘  ╲ 404-b
                    │
                    ▼
┌─────────────────────────────────────────┐
│  Transfer wet compound into a reaction   │
│  processing chamber                      │╲
└─────────────────────────────────────────┘  ╲ 408-b
                    │
                    ▼
┌─────────────────────────────────────────┐
│  Heat wet compound within reaction       │
│  chamber to dissociate and react to      │╲
│  produce hydrogen                        │  ╲ 412-b
└─────────────────────────────────────────┘
                    ⇓
┌ ─ ─ ─ ─ ─ ─ ─ ─ ─ ─ ─ ─ ─ ─ ─ ─ ─ ─ ─ ┐
│  Pass hydrogen reaction product through │
│  reduced-pressure chamber to remove     ┤
│  traces of unreacted carbon             │  416
└ ─ ─ ─ ─ ─ ─ ─ ─ ─ ─ ─ ─ ─ ─ ─ ─ ─ ─ ─ ┘
                    ⇓
┌ ─ ─ ─ ─ ─ ─ ─ ─ ─ ─ ─ ─ ─ ─ ─ ─ ─ ─ ─ ┐
│  Pass hydrogen reaction product through │
│  water-cooled chamber to remove         ┤
│  unreacted Water                        │  420
└ ─ ─ ─ ─ ─ ─ ─ ─ ─ ─ ─ ─ ─ ─ ─ ─ ─ ─ ─ ┘
                    ⇓
┌ ─ ─ ─ ─ ─ ─ ─ ─ ─ ─ ─ ─ ─ ─ ─ ─ ─ ─ ─ ┐
│  Generate energy from hydrogen reaction │
│  product                                ┤
│                                         │  424
└ ─ ─ ─ ─ ─ ─ ─ ─ ─ ─ ─ ─ ─ ─ ─ ─ ─ ─ ─ ┘
```

FIG. 4B

500

```
┌─────────────────────────────┐
│   Introduce C-O-H compound  │
│       into a chamber        │ 502
└─────────────────────────────┘
              │
              ▼
┌ ─ ─ ─ ─ ─ ─ ─ ─ ─ ─ ─ ─ ─ ─┐
│    Provide inert gas to the │
│           chamber           │ 504
└ ─ ─ ─ ─ ─ ─ ─ ─ ─ ─ ─ ─ ─ ─┘
              │
              ▼
┌─────────────────────────────┐
│ Heat C-O-H compound inside the│
│  chamber to form H₂, CO₂ and │ 506
│        carbon residue       │
└─────────────────────────────┘
              │
              ▼
┌ ─ ─ ─ ─ ─ ─ ─ ─ ─ ─ ─ ─ ─ ─┐
│     Separate hydrogen gas   │
│      from carbon dioxide    │ 508
└ ─ ─ ─ ─ ─ ─ ─ ─ ─ ─ ─ ─ ─ ─┘
```

Heat C-O-H compound inside the chamber to form $H_2$, $CO_2$ and carbon residue — 506

Separate hydrogen gas from carbon dioxide — 508

Burn hydrogen with oxygen to produce $H_2O$ and heat — 510

React $H_2$ with $O_2$ in fuel cell to convert into electrical power — 512

Convert heat into electrical power — 514

FIG. 5

600

Introduce C-O-H compound
into a chamber
602

Provide inert gas to the
chamber
604

Add water into the
chamber
606

Heat C-O-H compound inside
the chamber to form $H_2$, $CO_2$ and
carbon residue
608

Separate hydrogen gas
from carbon dioxide
610

Burn hydrogen with oxygen to
produce $H_2O$ and heat
612

React $H_2$ with $O_2$ in Fuel Cell to
convert into Eelectrical power
614

Convert heat into electrical
power
616

FIG. 6

700

Combine water with compound comprising carbon, oxygen, and yydrogen

704

Transfer wet compound into a reaction processing chamber

708

Heat wet compound within reaction chamber to dissociate and react to produce liquid fuel

712

Collect liquid fuel

714

Pass reaction product(s) through reduced-pressure chamber to remove traces of unreacted carbon

716

Pass reaction product(s) through water-cooled chamber to remove unreacted water

720

Generate energy from hydrogen reaction product

724

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060112638 A
- WO 01066496 A
- US 5019135 A
- US 5651953 A
- US 20100186291 A
- US 20100129691 A
- US 7144826 B2
- US 7192666 B2